# EUROPEAN PATENT APPLICATION

(11) **EP 4 231 481 A1**
(43) Date of publication of application: **23.08.2023**
(21) Application number: 21890776.4
(22) Date of filing: 09.09.2021
(51) Int. Cl.: H02J 7/00

(54) **CHARGING DEVICE AND CHARGING SYSTEM**

(30) Priority: 16.11.2020 CN 202011281204
(71) Applicant: GUANGDONG OPPO MOBILE TELECOMMUNICATIONS CORP., LTD., Dongguan, Guangdong 523860 (CN)
(72) Inventor: QUAN, Shengchao, Dongguan, Guangdong 523860 (CN)
(74) Representative: Ipside
(86) International application number: PCT/CN2021/117475
(87) International publication number: WO 2022/100248

(57) **Abstract**

Provided by the present application are a charging device, a charging assembly, and a charging system. The charging device comprises a first cover body, a charging member, a second cover body, a drive assembly and a buffer assembly. The charging member is carried on the first cover body. The second cover body is rotatably connected to the first cover body, and the charging device has an initial state in which the first cover body and the second cover body are closed. The drive assembly is used to drive the first cover body to rotate to a first position relative to the second cover body. When the first cover body rotates to the first position relative to the second cover body, an angle between the first cover body and the second cover body is a first angle. The buffer assembly is used to enable the first cover body to be manually rotated from the first position to a second position. When the first cover body rotates to the second position relative to the second cover body, the angle between the first cover body and the second cover body is a second angle, wherein the second angle is greater than the first angle. In multiple scenarios, the charging device of the present application may meet the needs of users for charging a device to be charged.

## Description

### TECHNICAL FIELD

The present disclosure relates to the field of charging, and in particular to a charging device and a charging system.

### BACKGROUND

As electronic devices develop rapidly, a charging device is being used more and more frequently. Wireless charging technology is one of main technologies applied for charging devices since wireless charging can be performed easily and generates low wear and tear on to-be-charged devices. Therefore, designing a structure of the wireless charging device has attracted attention of skilled persons in the art.

However, a traditional charging device is presented as a single form when charging a mobile phone and other to-be-charged devices. Demands of using the charging device in various application scenarios cannot be met.

### SUMMARY OF THE DISCLOSURE

In a first aspect, a charging device includes:
a first cover;
a charging member, carried in the first cover;
a second cover, rotatably connected to the first cover, wherein the charging device is capable of being in an initial state where the first cover is capped with the second cover;
a driving assembly, configured to drive the first cover to rotate relative to the second cover to reach a first position, wherein a first angle is formed between the first cover and the second cover when the first cover is rotated relative to the second cover to reach the first position; and
a cushion assembly, configured to allow the first cover to be manually rotated from the first position to a second position; wherein a second angle is formed between the first cover and the second cover when the first cover is rotated relative to the second cover to reach the second position, the second angle being greater than the first angle.

In a second aspect, a charging device includes:
a first cover;
a charging member, carried in the first cover;
a second cover, rotatably connected to the first cover, wherein the charging device is capable of being in an initial state where the first cover is capped with the second cover;
a driving assembly, configured to drive the first cover to rotate relative to the second cover by a preset angle; and
a cushion assembly, configured to slow down a speed that the first cover rotates relative to the second cover.

In a third aspect, a charging system includes a to-be-charged device and the charging device of any of the first and the second aspects. The to-be-charged device is arranged with a receiving member and a battery; when the to-be-charged device is arranged on the first cover, the receiving member is wirelessly connected to the charging member to charge the battery in the to-be-charged device.

### BRIEF DESCRIPTION OF THE DRAWINGS

In order to illustrate more clearly the technical solutions in the embodiments or the related art of the present disclosure, the accompanying drawings used for the description of the embodiments or the related art will be described in brief in the following. Apparently, the drawings in the following description are only some of the embodiments of the present disclosure, and other drawings may be obtained by any ordinary skilled person in the art based on these drawings without any creative work.
FIG. 1 is a schematic view of a charging device in a first state according to an embodiment of the present disclosure.
FIG. 2 is a schematic view of the charging device shown in FIG. 1 being in a second state.
FIG. 3 is a cross-sectional view of the charging device shown in FIG. 1, taken along the line I-I.
FIG. 4 is a rear view of a charging device omitting a portion of a second cover.
FIG. 5 is a rear view of the charging device shown in FIG. 1 omitting a portion of a second cover.
FIG. 6 is an enlarged view of a portion III shown in FIG. 5.
FIG. 7 is a cross-sectional view of the charging device shown in FIG. 1, taken along the line I-I and omitting partial components.
FIG. 8 is a cross-sectional view of the charging device shown in FIG. 2, taken along the line VII-VII.
FIG. 9 is a cross-sectional view of the charging device shown in FIG. 5, taken along the line IV-IV.
FIG. 10 is an enlarged view of a portion V shown in FIG. 9.
FIG. 11 is an enlarged view of a portion VI shown in FIG. 9.
FIG. 12 is a schematic view of a charging device in a first state according to another embodiment of the present disclosure.
FIG. 13 is a schematic view of the charging device shown in FIG. 12 being in a second state.
FIG. 14 is a schematic view of the charging device shown in FIG. 13 omitting partial components.
FIG. 15 is a cross-sectional view of the charging device shown in FIG. 14, taken along the line VIII-VIII.
FIG. 16 is an enlarged view of a portion VIV shown in FIG. 15.
FIG. 17 is a schematic view of partial components of the charging device shown in FIG. 12.
FIG. 18 is a schematic view of the partial components of the charging device shown in FIG. 17, being viewed from another viewing angle.
FIG. 19 is a schematic view of a driving assembly being assembled with a first sub-shell.
FIG. 20 is a structural schematic view of a position limiting member according to an embodiment of the present disclosure.
FIG. 21 is a structural schematic view of a driving member according to an embodiment of the present disclosure.
FIG. 22 is a schematic view of a charging device omitting a portion of a first cover according to an embodiment of the present disclosure.
FIG. 23 is a schematic view of the charging device shown in FIG. 22 omitting a portion of a second cover.
FIG. 24 is an exploded view of partial components shown in FIG. 23.
FIG. 25 is an enlarged view of a portion A shown in FIG. 24.
FIG. 26 is a perspective view of a driving cushion assembly.
FIG. 27 is an exploded view of the driving cushion assembly shown in FIG. 26.
FIG. 28 is a cross-sectional view of the driving cushion assembly shown in FIG. 26, taken along the line b-b.
FIG. 29 is a schematic view of a charging device in a second state according to another embodiment of the present disclosure.
FIG. 30 is a cross-sectional view of the charging device shown in FIG. 29, taken along the line c-c.
FIG. 31 is an enlarged view of a portion d shown in FIG. 30.
FIG. 32 is a schematic view of partial components of the charging device in the second state shown in FIG. 29.
FIG. 33 is a cross-sectional view of the partial components shown in FIG. 32.
FIG. 34 is an enlarged view of a portion e shown in FIG. 33.
FIG. 35 is a schematic view of partial components of a charging device according to another embodiment of the present disclosure.
FIG. 36 is a perspective view of the partial components of the charging device shown in FIG. 35.
FIG. 37 is a schematic view of the charging device shown in FIG. 36 in the second state.
FIG. 38 is a cross-sectional view of the charging device shown in FIG. 37, taken along the line E-E.
FIG. 39 is a schematic view of a charging device in the first state according to another embodiment of the present disclosure.
FIG. 40 is a cross-sectional view of the charging device shown in FIG. 39, taken along the line F-F.
FIG. 41 is an enlarged view of a portion U shown in FIG. 40.
FIG. 42 is a schematic view of a first cover disposed at a second position relative to a second cover of a charging device according to an embodiment of the present disclosure.
FIG. 43 is a cross-sectional view of the structure shown in FIG. 42, taken along the line G-G.
FIG. 44 is an enlarged view of a portion K shown in FIG. 43.
FIG. 45 is a schematic view of a charging device according to another embodiment of the present disclosure.
FIG. 46 is a cross-sectional view of the charging device shown in FIG. 45, taken along the line L-L.
FIG. 47 is an enlarged view of a portion M shown in FIG. 46.
FIG. 48 is a schematic view of a portion of the charging device show in FIG. 45.
FIG. 49 is a schematic view of a driving assembly after being assembled.
FIG. 50 is an exploded view of partial components of the driving assembly shown in FIG. 49.
FIG. 51 is a schematic view of an adjustment portion pressing an elastic portion.
FIG. 52 is a schematic view of a charging device in the first state according to an embodiment of the present disclosure.
FIG. 53 is a schematic view of the charging device shown in FIG. 52 being in the second state.
FIG. 54 is a cross-sectional view of the charging device shown in FIG. 52, taken along the line I-I.
FIG. 55 is an enlarged view of a portion II shown in FIG. 54.
FIG. 56 is an enlarged view of a portion III shown in FIG. 54.
FIG. 57 is an enlarged view of a portion II shown in FIG. 54.
FIG. 58 is a schematic view of a portion of the charging device.
FIG. 59 is an exploded view of the portion of the charging device shown in FIG. 58.
FIG. 60 is a perspective view of a second fixing member being assembled with a fourth fixing member shown in FIG. 59.
FIG. 61 is an exploded view of the structure shown in FIG. 60.
FIG. 62 is a rear view of a second sub-cover shown in FIG. 59.
FIG. 63 is a cross-sectional view of the charging device in the first state according to an embodiment of the present disclosure.
FIG. 64 is an exploded view of a portion IV shown in FIG. 63.
FIG. 65 is a cross-sectional view of a first fixing member being semi-engaged with a second fixing member and a third fixing member semi-engaged with a fourth fixing member of the charging device.
FIG. 66 is an enlarged view of a portion V shown in FIG. 65.
FIG. 67 is a schematic view of a first cover of the charging device being just uncapped from a second cover of the charging device or the first cover being about to cap with the second cover.
FIG. 68 is an enlarged view of a portion VI shown in FIG. 67.
FIG. 69 is a schematic view of a charging device in the first state according to another embodiment of the present disclosure.
FIG. 70 is a schematic view of the charging device shown in FIG. 69 being in the second state.
FIG. 71 is a schematic view of a charging device in the first state according to an embodiment of the present disclosure.
FIG. 72 is a schematic view of the charging device shown in FIG. 71 being in the second state.
FIG. 73 is a cross-sectional view of the charging device shown in FIG. 71, taken along the line I-I.
FIG. 74 is an enlarged view of a portion II shown in FIG. 73.
FIG. 75 is a schematic view of a portion of the charging device according to an embodiment of the present disclosure.
FIG. 76 is an exploded view of the structure shown in FIG. 75.
FIG. 77 is an enlarged view of a portion III shown in FIG. 76.
FIG. 78 is a schematic view of a second fixing member shown in FIG. 76.
FIG. 79 is a schematic view of the structure shown in FIG. 75 omitting a second sub-cover.
FIG. 80 is an enlarged view of a portion IV shown in FIG. 79.
FIG. 81 is a schematic view of the structure shown in FIG. 75 omitting a second sub-cover.
FIG. 82 is a schematic view of forces being applied to the second fixing member.
FIG. 83 is a schematic view of partial components of the charging device being in the first state.
FIG. 84 is a schematic view of the charging device shown in FIG. 83 being just uncapped or being about to be capped.
FIG. 85 is a schematic view of partial components of the charging device shown in FIG. 83 being in the second state.
FIG. 86 is a schematic view of a charging device being in a first state according to an embodiment of the present disclosure.
FIG. 87 is a schematic view of the charging device shown in FIG. 86 being in the second state.
FIG. 88 is a schematic view of the charging device shown in FIG. 86 omitting a portion of a second cover.
FIG. 89 is a schematic view of the structure shown in FIG. 88, being viewed from another viewing angle.
FIG. 90 is a cross-sectional view of the structure shown in FIG. 89, taken along the line A-A.
FIG. 91 is a perspective view of an operation member according to an embodiment of the present disclosure.
FIG. 92 is a perspective view of the operation member shown in FIG. 91, being viewed from another viewing angle.
FIG. 93 is a perspective view of a swinging member according to an embodiment of the present disclosure.
FIG. 94 is a perspective view of an operation member according to an embodiment of the present disclosure.
FIG. 95 is a perspective view of the operation member shown in FIG. 94, being viewed from another viewing angle.
FIG. 96 is a schematic view of a charging device being in the second state according to an embodiment of the present disclosure.
FIG. 97 is a schematic view of a portion of a charging device being in the first state according to an embodiment of the present disclosure.
FIG. 98 is a cross-sectional view of the structure shown in FIG. 97, taken along the line B-B.
FIG. 99 is a schematic view of a first cover of the charging device being just uncapped from a second cover of the charging device or the first cover being about to cap with the second cover.
FIG. 100 is a cross-sectional view of the structure shown in FIG. 99, taken along the line C-C.
FIG. 101 is a schematic view of a portion of the charging device being in the second state.
FIG. 102 is a cross-sectional view of the structure shown in FIG. 101, taken along the line D-D.
FIG. 103 is a circuit diagram of a charging device according to an embodiment of the present disclosure.
FIG. 104 is a schematic view of a charging system according to an embodiment of the present disclosure.

### Reference numerals:

Charging system-3, to-be-charged device-5, charging device-1, first cover-110, connection end-111, charging member-120, second cover-130, first portion-131, second portion-132, body portion-133, receiving space-134, first sub-cover-135, second sub-cover-136, recess-1311, driving assembly-140, position limiting member-141, receiving portion-1411, first fixing portion-1412, second fixing portion-1413, position limiting portion-1414, receiving space-1415, driving member-142, third fixing portion-1421, deformation portion-1422, driving portion-1423, first fixing member-180, second fixing member-190, fixing body-191, fixing branch-192, receiving groove-1911, fourth engaging face-1912, operation member-210, first engaging face-211, resetting member-220, pushing member-230, pushing body-231, second engaging face-2311, pushing portion-232, third engaging face-2321, driving cushion assembly-7, cushion assembly-150, first shaft sleeve-151, second sleeve body-1511, protrusion-1512, second shaft sleeve-152, first sleeve body-1521, first retaining portion-1522, damping medium-153, adapter-154, seal member-155, damping member-156, second retaining portion-1561, damping portion-1562, damping body-1563, elastic portion-1564, receiver-51, battery-52, position limiting post-1362, opening-1363, recess-1311, third connection face-1321, fourth connection face-1322, through hole-1323, first connection face-1951, second connection face-1952, slide channel-1955, fixed engaging portion-196, operation member-210, first engaging face-211, first resetting member-240, second resetting member-250, third resetting member-290, anti-slip member-310, swinging member-320, flipping portion-321, connection rod portion-322, pushing portion-323, operation member-210, pressing portion-216, contact portion-217.

### DETAILED DESCRIPTION

According to a first aspect, the present disclosure provides a charging device, including the following.

A first cover is arranged.

A charging member is arranged. The charging member is carried on the first cover.

A second cover is arranged. The second cover body is rotatably connected to the first cover. The charging device has an initial state where the first cover is capped with the second cover.

A driving assembly is arranged and is configured to drive the first cover to rotate relative to the second cover to reach a first position. A first angle is formed between the first cover and the second cover when the first cover is rotated relative to the second cover to reach the first position.

A cushion assembly is configured to allow the first cover to be manually rotated from the first position to a second position. A second angle is formed between the first cover and the second cover when the first cover is rotated relative to the second cover to reach the second position, the second angle being greater than the first angle.

The driving assembly includes the following.

A position limiting member is arranged. The position limiting member is fixed to the second cover.

A driving member is arranged. An end of the driving member is fixed to the position limiting member, and the other end of the driving member is configured to drive the first cover to rotate relative to the second cover. When the driving member drives the first cover to rotate to reach the first position, the driving member is limited by the position limiting member and cannot be moving further.

The position limiting member includes the following:
A receiving portion is arranged. The receiving portion has a receiving space to receive at least a part of the driving member.

A first fixing portion is arranged. The first fixing portion is connected to the receiving portion to be fixed to the second cover. A second fixing portion is arranged. The second fixing portion is connected to the receiving portion to fix at least a part of the driving member. A position limiting portion is arranged. The position limiting portion is connected to the receiving portion to limit an extent to which the driving member drives the first cover to rotate.

The driving member includes the following.

A third fixing portion is arranged. The third fixing portion is fixed to the second fixing portion.

A deformation portion is arranged. The deformation portion is connected to the third fixing portion. When the charging device is in the initial state, the deformation portion is deformed.

A driving portion is arranged. When the first cover is uncapped from the second cover, the deformation portion drives the driving portion to drive the first cover to rotate.

The driving assembly further includes the following.

An adjustment member is arranged. The adjustment member is configured to adjust the extent of deformation of the driving member when the charging device is in the initial state where the first cover is capped with the second cover.

The position limiting member includes a receiving portion, a first fixing portion, and an elastic portion. The receiving portion has a receiving space. The first fixing portion is configured to be fixed to the second cover. The elastic portion is arranged on an inner wall of the receiving portion defining the receiving space. The adjustment member includes: a rotating portion, a plurality of adjustment portions, and a fixing engagement portion. The rotating portion is received in the receiving space and is rotatable. The plurality of adjustment portions are disposed around a circumference of the rotating portion. The plurality of adjustment portions are configured to cooperate with the elastic portion. The fixing engagement portion is disposed at an end of the rotating portion. The fixing engagement portion is configured to fix the driving member. When the rotating portion is rotating, the rotating portion drives the plurality of adjustment portions to rotate to further adjust the extent of deformation of the driving member in the initial state.

The adjustment member further includes an operation portion. The operation portion is connected to the rotating portion and is exposed from the second cover. The operation portion is configured to receive an operation and to drive the rotating portion to rotate.

An end of the cushion assembly is connected to the driving assembly, and the other end of the cushion assembly is fixed to the first cover. The cushion assembly is further configured to cushion the first cover when the driving assembly drives the first cover to move.

The cushion assembly includes a first shaft sleeve, a second shaft sleeve, and a damping medium. The first shaft sleeve is fixed to the driving assembly. The second shaft sleeve is disposed inside the first shaft sleeve and is movable relative to the first shaft sleeve. A rotation gap is defined between the first shaft sleeve and the second shaft sleeve. The damping medium is received in the rotation gap. The damping medium is configured to retard relative movement between the first shaft sleeve and the second shaft sleeve.

The cushion assembly is configured to stop the first cover at any intermediate position between the first position and the second position.

The driving cushion assembly further includes: an adapter. A part of the adapter is configured to be fixed to the fixed member. Another part of the adapter sleeves a position limiting member in the driving assembly. The adapter is rotatable relative to the position limiting member. An end of the second shaft sleeve is further fixed to the adapter.

The second shaft sleeve includes the following.

A first sleeve body is included. A part of the first sleeve body is arranged inside the first shaft sleeve and is rotatable relative to the first shaft sleeve.

A first retaining portion is included. The first retaining portion is disposed at an end of the first sleeve body away from the position limiting member and protrudes out of a circumference of the first sleeve body. The first retaining portion is configured to be fixed to the adapter.

The cushion assembly further includes a damping member. The damping member includes a second retaining portion and a damping portion. The second retaining portion is fixed to the adapter. The damping portion sleeves a circumference of the second shaft sleeve. The damping portion is configured to cooperate with the second shaft sleeve so as to limit a rotation angle of the damping portion with respect to the second shaft sleeve.

The damping portion includes a damping body and an elastic portion. The damping body sleeves the circumference of the first shaft sleeve. The elastic portion is protruding and is connected to an inner wall of the damping body. The first shaft sleeve includes a second sleeve body and a protrusion. The second sleeve body sleeves an outside of the second shaft sleeve. The protrusion is protruding and connected to an outside of the second sleeve body. A friction is generated by interference between the protrusion and the elastic portion and capable of stopping the first cover at any position between the first position and the second position.

The second cover has a body portion and a first portion protruding out of the body portion. The first cover has a connection end. The connection end is rotatably connected to the first portion and is further configured to be limited by the first portion to limit a rotation angle at which the first cover is able to be manually rotated.

The charging device further includes the following.

A first fixing member is arranged. The first fixing member is arranged on the first cover.

A second fixing member is arranged. The second fixing member is arranged on the second cover. When the first fixing member is fixed to the second fixing member, the first cover is capped with the second cover. An operation member is configured to enable the first fixing member to be unfixed from the second fixing member.

The second cover includes a first portion and a second portion which is bent relative to the first portion and connected to the first portion. The first cover is rotatably connected to the first portion. When the charging device is in the first state, the second portion is exposed from the first cover, and the operation member is arranged on the second portion.

The first cover includes a connection end. The connection end is rotatably connected to the first portion. The operation member is disposed at an end of the second portion away from the connection end.

The second cover further includes the following.

A body portion is arranged. The body portion is connected to the first portion and the second portion. The first portion and the second portion are each protruding from the body portion and are disposed on a same side of the body portion. The body portion, the first portion, and the second portion cooperatively define a receiving space. The receiving space is defined to receive the first cover when the charging device is in the first state. A portion of the second fixing member engaged with the first fixing member is disposed out of the receiving space.

When the operation member is pressed, the portion of the second fixing member engaging with the first fixing member move in a direction away from the receiving space, allowing the first fixing member to be disengaged from the second fixing member.

When the operation member is pressed, the portion of the second fixing member engaging with the first fixing member translates in the direction away from the receiving space or flips, allowing the first fixing member to be disengaged from the second fixing member.

The charging device further includes the following.

A pushing member is arranged. The pushing member is carried on the second cover and configured to be driven by the operation member to move. The second fixing member is driven to be deformed when the pushing member moves to disengage the first fixing member from the second fixing member.

The operation member is engaged with the pushing member by an inclined face.

The charging device further includes: the operation being engaged with the second fixing member by an inclined face. When the operation member is pressed, the second fixing member is driven to be disengaged from the first fixing member.

The second cover further includes the following.

A body portion is included. The body part is connected to the first portion and the second portion. The first portion and the second portion are each protruding from the body portion and are disposed on a same side of the body portion. The body portion, the first portion, and the second portion cooperatively define a receiving space. The receiving space is defined to receive the first cover when the charging device is in the first state. A portion of the second fixing member engaged with the first fixing member is exposed in the receiving space.

The second cover includes a first sub-cover body and a second sub-cover. The first sub-cover, with respect to the second sub-cover, is away from the first cover. The second fixing member is carried on the second sub-cover. The second sub-cover has an opening communicated with the receiving space. The second fixing member is partially exposed out of or retracted into the second cover through the opening.

The charging device further includes the following.

A resetting member is arranged. The resetting member is configured to reset the second fixing member and the operation member after the second fixing member is disengaged from the first fixing member.

According to a second aspect, the present disclosure provides a charging device, including the following.

A first cover is arranged.

A charging member is arranged. The charging member is carried on the first cover.

A second cover is arranged. The second cover body is rotatably connected to the first cover. The charging device has an initial state where the first cover is capped with the second cover.

A driving assembly is arranged. The driving assembly is configured to drive the first cover to rotate by a predetermined angle relative to the second cover.

A cushion assembly is arranged. The cushion assembly is configured to slow down a speed that the first cover rotates relative to the second cover.

The cushion assembly includes a first shaft sleeve, a second shaft sleeve, and a damping medium. The first shaft sleeve is fixed to the driving assembly. The second shaft sleeve is disposed inside the first shaft sleeve and is movable relative to the first shaft sleeve. A rotation gap is defined between the first shaft sleeve and the second shaft sleeve. The damping medium is received in the rotation gap. The damping medium is configured to retard relative movement between the first shaft sleeve and the second shaft sleeve.

The cushion assembly further includes the following.

An adapter is arranged. A part of the adapter is configured to be fixed to the fixed member. Another part of the adapter sleeves a position limiting member in the driving assembly. The adapter is rotatable relative to the position limiting member. An end of the second shaft sleeve is further fixed to the adapter.

A seal member is arranged. The seal member is configured to seal the rotation gap to prevent the damping medium from leaking.

The charging device further includes a first fixing member, second fixing member, and an operation member. The first fixing member is arranged on the first cover. The second fixing member is arranged on the second cover. The operation member is configured to contact engagement between the first fixing member and the second fixing member, enabling the first fixing member to be separated from the second fixing member. The second cover includes a first portion and a second portion which is bent relative to the first portion and connected to the first portion. The first cover is rotatably connected to the first portion. When the charging device is in the first state, the second portion is exposed from the first cover, and the operation member is arranged on the second portion.

The second cover further includes the following.

A body portion is arranged. The body portion is connected to the first portion and the second portion. The first portion and the second portion are each protruding from the body portion and are disposed on a same side of the body portion. The body portion, the first portion, and the second portion cooperatively define a receiving space. The receiving space is defined to receive the first cover when the charging device is in the first state. The second fixing member is partially disposed into the receiving space.

The second cover includes a first sub-cover and a second sub-cover. The first sub-cover, with respect to the second sub-cover, is away from the first cover. The second fixing member is carried on the second sub-cover. The second sub-cover has an opening communicated with the receiving space. The second fixing member is partially exposed out of or retracted into the second cover through the opening.

The charging device further includes the following.

A swinging member is arranged. The swinging member is movably connected to the second cover to rotate, driven by the operation member, when the operation member is pressed. Rotation of the swinging member further drives the second fixing member to be disengaged from the first fixing member, allowing the first cover to be separated from the second cover.

The swinging member includes the following.

A flipping portion is included. The flipping portion is arranged on a side of the operation member away from a pressing portion. The flipping portion is configured to be flipped, driven by the operation member.

A connection rod portion is included. The connection rod portion is connected to the flipping portion and configured to be driven by the flipping portion flipping to rotate.

A pushing portion is included. The pushing portion is connected to the connection rod portion and is spaced apart from the flipping portion. The pushing portion is configured to push the second fixing member to move, driving the second fixing member to be disengaged from the first fixing member.

The second fixing member includes the following.

An operation portion is included. The operation portion is configured to cooperate with the pushing portion and is driven by the pushing portion to move.

A connection portion is included. The connection portion is connected to the operation portion.

A fixing engagement portion is included. The fixing engagement portion is connected to the connection portion. The fixing engagement portion is configured to engage with the first fixing member and is driven by the pushing portion to move to be disengaged from the first fixing member.

The driving assembly includes a driving member. The driving member is deformed when the charging device is in the initial state. When the first cover is uncapped from the second cover, the first cover rotates, driven by deformation of the driving member, relative to the second cover.

The driving assembly further includes the following.

An adjustment member is included. The adjustment member is configured to adjust the extent of deformation of the driving member when the device is in the initial state.

The charging device further includes a battery. The battery is arranged on the first cover or the second cover. The battery is configured to provide electrical energy to a charging member.

According to a third aspect, the present disclosure provides a charging system. The charging system includes a to-be-charged device and a charging device as described in any implementation of the first aspect, in the first aspect, in any implementation of the second aspect, and in the second aspect. The to-be-charged device is arranged with a receiving member and a battery. When the to-be-charged device is disposed on the first cover, the receiving member is wirelessly connected to the charging member to charge the battery in the to-be-charged device.

Technical solutions in the embodiments of the present disclosure will be clearly and completely described below by referring to the accompanying drawings in the embodiments of the present disclosure. Obviously, the described embodiments are only a part of but not all of the embodiments of the present disclosure. All other embodiments obtained by any ordinary skilled person in the art based on the embodiments in the present disclosure without any creative work shall fall within the scope of the present disclosure.

Terms of "embodiment" or "implementation" mean that a particular feature, a structure or characteristic described by referring to the embodiment or the implementation may be included in at least one embodiment of the present disclosure. Presence of the term in various sections in the specification does not necessarily mean one embodiment, nor a separate or an alternative embodiment that is mutually exclusive with other embodiments. It shall be understood, both explicitly and implicitly, by any ordinary skilled person in the art that the embodiments described herein may be combined with other embodiments.

The present disclosure provides a charging device. The charging device is configured to charge a to-be-charged device. The to-be-charged device may be, but is not limited to, a mobile phone, a tablet, an e-reader, a handheld computer, a laptop, a netbook, an e-book, and an Augmented Reality (AR)/Virtual Reality (VR) device, a watch, a necklace, glasses, headphones, a projector, electric toothbrushes, and other devices having a battery. The following examples are illustrated by taking the mobile phone as the to-be-charged device and taking a wireless charger for charging the mobile phone as the charging device, which will not be repeatedly emphasized in the following.

The present disclosure provides a driving cushion assembly, a charging device, and a charging system. The driving cushion assembly is an assembly configured in the charging device 1 and will be described later by referring to various components and assemblies in the charging device 1. The charging device 1 is configured to charge a to-be-charged device 5. The to-be-charged device 5 may be, but is not limited to: a mobile phone, a tablet, an e-reader, a handheld computer, a laptop, a netbook, an e-book, and an Augmented Reality (AR)/Virtual Reality (VR) device, a watch, a necklace, glasses, headphones, a projector, electric toothbrushes, and other devices having batteries. The following embodiment will be illustrated by taking the mobile phone as an example of the to-be-charged device 5, and the charging device 1 is a wireless charger configured to charge the mobile phone, which will not be repeated hereinafter.

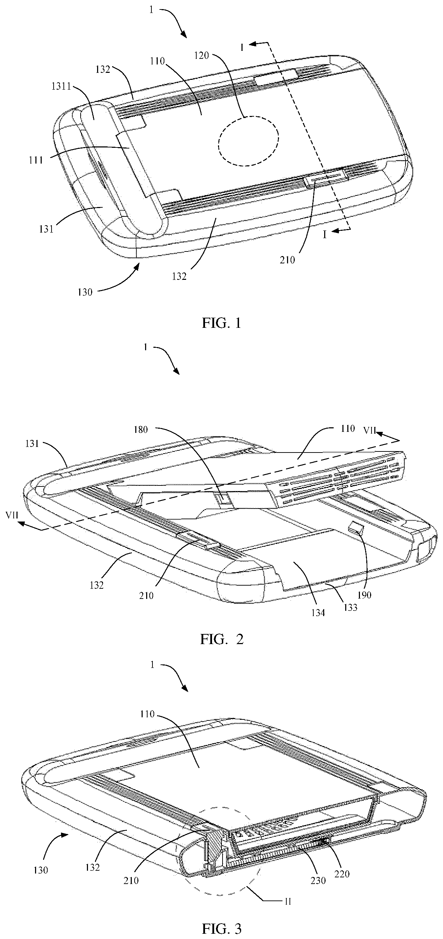

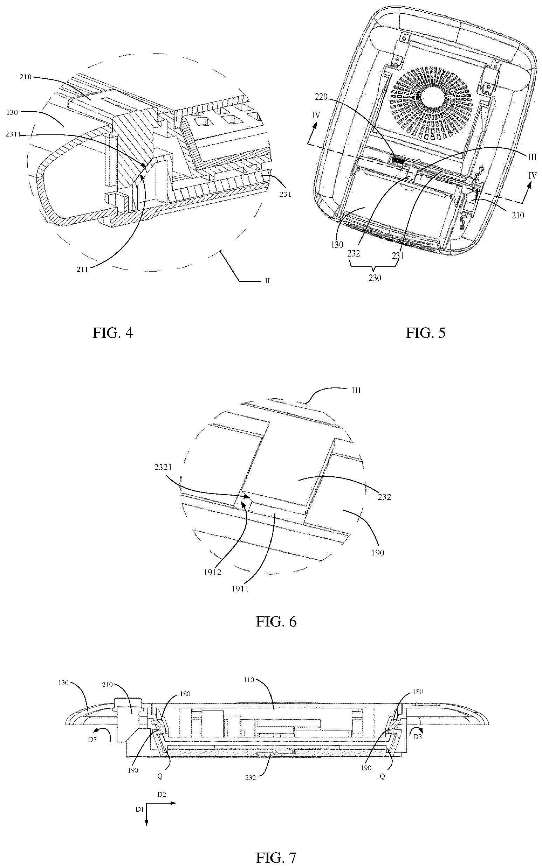

As shown in FIG. 1, FIG. 2, FIG. 3, and FIG. 4, FIG. 1 is a schematic view of a charging device in a first state according to an embodiment of the present disclosure; FIG. 2 is a schematic view of the charging device shown in FIG. 1 being in a second state; FIG. 3 is a cross-sectional view of the charging device shown in FIG. 1, taken along the line I-I; and FIG. 4 is a rear view of the charging device omitting a portion of a second cover. The charging device 1 includes: a first cover 110, a charging member 120, a second cover 130, and an operation member 210. The first cover 110 is configured to carry the to-be-charged device. The first cover 110 is arranged with a first fixing member 180. The charging member 120 is arranged on and carried by the first cover 110 and is configured to charge the to-be-charged device. The second cover 130 is arranged with a second fixing member 190. The second fixing member 190 is configured to cooperate with the first fixing member 180 to allow the charging device 1 to be in a first state, and the first state refers to the first cover 110 and the second cover 130 being capped with each other. The second cover 130 includes a first portion 131 and a second portion 132 which is bent relative to and connected to the first portion 131. The first cover 110 is rotatably connected to the first portion 131. The second portion 132 is exposed out of the first cover 110 when the charging device 1 is in the first state. The operation member 210 is arranged in the second portion 132. The operation member 210 is configured to disengage the first fixing member 180 from the second fixing member 190, such that the first cover 110 is uncapped with the second cover 130. When the first fixing member 180 is disengaged from the second fixing member, the first cover 180 is driven by the driving assembly 140 to be tilted relative to the second cover 180, and an angle is formed between the first cover 110 and the second cover 130. In this way, the charging device 1 is in a second state, and the second state refers to the first cover 110 and the second cover 130 being separated from each other.

To be noted that the terms "first", "second", and so on, in the specification, claims, and the above-mentioned accompanying drawings of the present disclosure are used to distinguish different objects and are not intended to describe a particular order. Furthermore, the terms "include", "have", any variation thereof, are intended to cover non-exclusive inclusion.

The present embodiment is illustrated by taking the first cover 110 as an upper cover and taking the second cover 130 as a lower cover. The so-called lower cover is usually a cover arranged on a carrying member, and the carrying member may be a bracket, a table, and so on. The so-called upper cover is a cover opposite to the lower cover. The "upper" and "lower" in the terms "upper cover" and "lower cover" are used for understanding, and shall not be interpreted as limiting the charging device 1 in the present disclosure. Although it is mentioned that the lower cover is usually the cover arranged on the carrying member, in some embodiments, the upper cover may be arranged on the carrying member, as long as the charging device 1 can charge the to-be-charged device 5. It shall be understood that in other embodiments, the first cover 110 may be the lower cover, and the second cover 130 may be the upper cover.

A shape of the first cover 110 may be, but is not limited to, squared, rectangular, circular, oval, and so on. Material of the first cover 110 is typically insulating material. In an embodiment the material of the first cover 110 is insulating and electromagnetic wave non-shielding material, such as plastic, rubber, and so on. A shape of the second cover 130 may be, but is not limited to, squared, rectangular, circular, oval, and so on. Material of the second cover 130 is typically insulating material. In an embodiment the material of the second cover 130 is insulating and electromagnetic wave non-shielding material, such as plastic, rubber, and so on. A size of the first cover 110 may be smaller than a size of the second cover 130. In some embodiments, the size of the first cover 110 may be larger than the size of the second cover 130. In some embodiments, the size of the first cover 110 may be equal to the size of the second cover 130. The present disclosure does not limit the sizes of the two covers. The present embodiment will be illustrated by taking the size of the first cover 110 being smaller than the size of the second cover 130 as an example.

The charging member 120 may be, but is not limited to, a charging member 120 having wireless charging capabilities, or may be a charging member 120 having wired charging capabilities. The wireless charging refers to the charging member 120 charging the to-be-charged device 5 without directly contacting the to-be-charged device 5. The wired charging refers to the charging member 120 directly contacting and electrically connected to the to-be-charged device to be charged 5 to charge the to-be-charged device 5. The present embodiment will be illustrated by taking the charging member 120 being the charging member 120 having the wireless charging capabilities as an example. When the charging member 120 is the charging member 120 having the wireless charging capabilities, the charging member 120 may be, but is not limited to, a wireless coil.

The charging member 120 being carried on the first cover 110 includes, but is not limited to, the following. The charging member 120 is arranged on a surface of the first cover 110 away from the second cover 130. In some embodiments, the charging member 120 is arranged on a surface of the first cover 110 facing the first cover 110. In some embodiments, the charging member 120 is embedded in the first cover 110. In the present embodiment, the charging member 120 is embedded in the first cover 110.

When the first fixing member 180 is engaged with the second fixing member 190, the first cover 110 and the second cover 130 are capped with and fixed to each other. The angle between the first cover 110 and the second cover 130 is equal to zero, or is greater than zero and less than a predetermined angle. The predetermined angle may be, but is not limited to, 5°. In this case, the first cover 110 may be attached to and fit with the second cover 130. The state where the first cover 110 and the second cover 130 are capped and fixed with each other together is the first state, denoted as an initial state herein or a horizontal charging state. The initial state is merely a name given to the state where the first cover 110 of the charging device 1 and the second cover 130 of the charging device 1 are capped with each other, and shall not be interpreted as the charging device 1, when being in use, having to be in the initial state before entering another state.

When the first fixing member 180 is disengaged from the second fixing member 190, an end of the first cover 110 is separated from an end of the second cover 130, and the other end of the first cover 110 is rotatably connected to the first portion 131. Therefore, in the second state, the first cover 110 is raised, enabling an angle greater than 0 degree to be formed between the first cover and the second cover 130. Accordingly, the second state is referred to as a standing charging state. When the charging device 1 is in the second state, the angle between the first cover 110 and the second cover 130 may be, but is not limited to, 50°.

For the charging device 1 of the present embodiment, the first fixing member 180 may be capped with the second fixing member 190 by allowing the first fixing member 180 to be engaged with the second fixing member 190. Therefore, the charging device 1 may charge the to-be-charged device 5 in the first state where the first cover 110 being capped with the second cover 130. Furthermore, when the first fixing member 180 and the second fixing member 190 are disengaged from each other, the charging device 1 is in the first state where the end of the first cover 110 is separated from the end of the second cover 130. The charging device 1 may also charge the to-be-charged device 5 in the second state. In this way, the user's demands of charging the to-be-charged device 5 in various scenarios can be met.

The second cover 130 includes the first portion 131 and the second portion 132 which is bent relative to and connected to the first portion 131. The first cover 110 is rotatably connected to the first portion 131. Therefore, the second portion 132 is a side wall located on a side of the first cover 110. The operation member 210 is arranged on the second portion 132. That is, the operation member 210 is located at a side of the charging device 1 but not at an end of the charging device 1 opposite to the first portion 131. Technical effects of the charging device 1 provided in the present embodiment will be described below by comparing to a structure of a charging device 1 in the relevant technology (not the prior art).

In the relevant technology, the operation member 210 may be disposed at a tail end of the second cover 130. The tail end refers to an end of the second cover 130 opposite to a connection end 111 connected to the first cover 110. Arranging the operation member 210 at the tail end of the second cover 130 enables a distance between the connection end 111 of the second cover 130 and the tail end of the second cover 130 to be longer, such that the charging device 1 may not be shortened.

For the charging device 1 provided in the present embodiment, the operation member 210 is arranged on the second portion 132, i.e., on the side wall between the connection end 111 and the tail end of the second cover 130. In this way, the distance between the connection end 111 of the second cover 130 and the tail end of the second cover 130 may be reduced, the charging device 1 may be shortened. Alternatively, a space that is originally defined at the tail end of the second cover 130 may be used for other purposes.

In addition, in the relevant technology, the operation member 210 is disposed at the tail end of the second cover 130. In this way, when the user presses the operation member 210 to release the first cover 110, the first cover 110 pops up and may potentially hit a hand of the user. For the charging device 1 provided in the present embodiment, the operation member 210 is arranged in the second portion 132, reducing or even avoiding the possibility that the first cover 110 hits the hand.

To summarize, the charging device 1 provided in the present embodiment has the first state and the second state. The charging device 1 can charge the to-be-charged device 5 in both the first state and the second state. Therefore, the user's demands of charging the to-be-charged device 5 in various scenarios can be met. Furthermore, the operation member 210 is arranged in the second portion 132, enabling the charging device 1 to be shortened.

Further, in the present embodiment, the first cover 110 includes a connection end 111. The connection end 111 is rotatably connected to the first portion 131. The operation member 210 is disposed at an end of the second portion 132 away from the connection end 111.

In the present embodiment, the operation member 210 is disposed at the end of the second portion 132 away from the connection end 111. In this way, the operation member 210 is not required to apply a relatively large force to disengage the first fixing member 180 from the second fixing member 190, achieving an effect of saving force application.

In the present embodiment, the second cover 130 further includes a body portion 133. The body portion 133 is connected to the first portion 131 and the second portion 132. The first portion 131 and the second portion 132 are each protruding out of the body portion 133 and are disposed on a same side of the body portion 133. The body portion 133, the first portion 131, and the second portion 132 cooperatively define a receiving space 134. The receiving space 134 is defined to receive the first cover 110 when the charging device 1 is in the first state.

In the present embodiment, a portion of the second fixing member 190 that is engaged with the first fixing member 180 is disposed out of the receiving space 134. The portion of the second fixing member 190 that is engaged with the first fixing member 180 moves in a direction away from the receiving space 134 to allow the first fixing member 180 to be disengaged from the second fixing member 190.

The body portion 133, the first portion 131 and the second portion 132 may be configured as an integral one-piece structure, or configured as being separated from each other. When the charging device 1 is in the first state, the surface of the first cover 110 away from the second cover 130 is aligned with, or substantially aligned with, a surface of the first portion 131 away from the body portion 133. Accordingly, when the charging device 1 is in the first state, the surface of the first cover 110 away from the second cover 130 is aligned with, or substantially aligned with, the surface of the second portion 132 away from the body portion 133. In this way, the charging device 1 may have a relatively large carrying surface when being in the first state, and may carry the to-be-charged device 5 more firmly, preventing the to-be-charged device 5 from slipping off from the first cover 110. Furthermore, since the charging member 120 is carried on the first cover 110, the first cover 110 is received in the receiving space 134 when the charging device 1 is in the first state. In this way, the first cover 110 and the charging member 120 carried in the first cover 110 may be prevented from being damaged by external impacts.

In the present embodiment, two second portions 132 are arranged. The two second portions 132 are connected to two opposite ends of the first portion 131 respectively. The first portion 131 and the two the second portions 132 cooperatively define the receiving space 134. In this way, the charging device 1, when being in the first state, has a relatively large carrying surface, such that the charging device 1 may carry the to-be-charged device 5 more firmly, preventing the to-be-charged device 5 from slipping off from the first cover 110. In addition, the first cover 110 may be better protected, preventing the first cover 110 and the charging device 120 carried in the first cover 110 from being damaged due to external impacts.

In the present embodiment, the surface of the first portion 131 away from the body portion 133 defines a recess 1311. When the charging device 1 is in the second state, the first cover 110 and the first portion 131 are engaged with each other to hold the to-be-charged device 5. That is, the to-be-charged device 5 may be limited by the recess 1311 on the first portion 131 and may not be dropped easily.

As shown in FIG. 3 and FIG. 4, the charging device 1 further includes a pushing member 230, the pushing member 230 is carried in the second cover 130 and is configured to be driven by the operation member 210 to move. The pushing member 230 may move to drive the second fixing member 190 to be deformed to allow the first fixing member 180 to be disengaged from the second fixing member 190.

Specifically, the operation member 210 has a first engaging face 211. The first engaging face 211 is an inclined face facing the pushing member 230. As shown in FIG. 5 and FIG. 6, FIG. 5 is a rear view of the charging device shown in FIG. 1 omitting a portion of the second cover; and FIG. 6 is an enlarged view of a portion III shown in FIG. 5. The pushing member 230 includes a pushing body 231 and a pushing portion 232. The pushing body 231 has a second engaging face 2311 engaging with the first engaging face 211. The second engaging face 2311 is an inclined face facing towards the operation member 210. The pushing portion 232 is connected to the pushing body 231 and is configured to push the second fixing member 190 to be deformed.

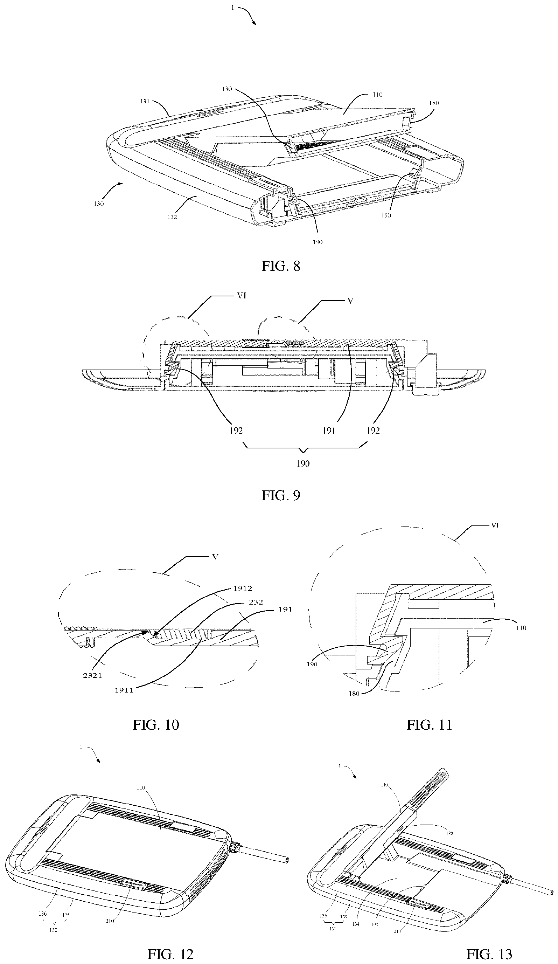

A process of separating the first cover 110 from the second cover 130 of the charging device 1 provided by the present disclosure will be illustrated, by referring to FIG. 7 and FIG. 8, under an operation of the operation member 210. FIG. 7 is a cross-sectional view of the charging device shown in FIG. 1, taken along the line I-I and omitting partial components; and FIG. 8 is a cross-sectional view of the charging device shown in FIG. 2, taken along the line VII-VII. In the present embodiment, the pushing body 231 in the pushing member 230 is extending along a width direction of the charging device 1. The operation member 210 is extending along a thickness direction of the charging device 1. Interaction between the operation member 210 and the pushing member 230 will be described in detail below. When the operation member 210 is being pressed by the user to move in the thickness direction of the charging device 1 (D1 direction) away from the first cover 110, the operation member 210 compresses the pushing body 231 due to the first engaging face 211 being engaged with the second engaging face 2311. In this way, the pushing body 231 moves in a direction away from the operation member 210. The pushing portion 232 is connected to the pushing body 231. Therefore, when the pushing body 231 moves in the direction away from the operation member 210 (direction D2), the pushing portion 232 is driven to move in the direction away from the operation member 210. The pushing portion 232 moving in the direction away from the operation member 210 drives the second fixing member 190 to flip outwardly by taking a support point Q on the second cover 130 as a pivot point (direction D3), such that the second fixing member 190 is deformed. Deformation of the second fixing member 190 causes the first fixing member 180 to be disengaged from the second fixing member 190, such that the end of the first cover 110 is separated from the end of the second cover 130. In other words, when the operation member 210 is pressed, a portion of the second fixing member 190 engaged with the first fixing member 180 is flipped in a direction away from the receiving space 134, enabling the first fixing member 180 to be disengaged from the second fixing member 190.

Further, as shown in FIG. 9 and FIG. 10, FIG. 9 is a cross-sectional view of the charging device shown in FIG. 5, taken along the line IV-IV; and FIG. 10 is an enlarged view of a portion V shown in FIG. 9. The pushing portion 232 has a third engaging face 2321, and the third engaging face 2321 is an inclined face away from the operation member 210. The second fixing member 190 has a receiving groove 1911. The receiving groove 1911 is configured to receive the pushing portion 232. The receiving groove 1911 has a fourth engaging face 1912. The fourth engaging face 1912 is an inclined surface away from the operation member 210. The pushing portion 230 is engaged with the second fixing member 190 by the third engaging face 2321 and the fourth engaging face 1912.

The pushing portion 232 is received in the receiving groove 1911. When the pushing portion 232 is driven by the pushing body 231 to move in the direction away from the operation member 210, the pushing portion 232 compresses, by the third engaging face 2321 being engaged with the fourth engaging face 1912, a portion of the second fixing member 190 that defines the receiving groove 1911 to cause the portion of the second fixing member 190 to be deformed in a direction approaching the first cover 110.

The second fixing member 190 includes a fixing body 191 and a fixing branch 192. The fixing body 191 defines the receiving groove 1911. The fixing branch 192 is bent relative to and connected to the fixing body 191. The fixing branch 192 is configured to cooperate with the first fixing member 180 to maintain the charging device 1 in the first state.

When the pushing portion 232 compresses, by the third engaging face 2321 being engaged with the fourth engaging face 1912, the portion of the second fixing member 190 that defines the receiving groove 1911 (i.e., the fixing body 191) to cause the portion of the second fixing member 190 to be deformed in the direction approaching the first cover 110, the fixing branch 192 is driven to expand outwards, causing the first fixing member 180 to be disengaged from the second fixing member 190.

As shown in FIG. 11, FIG. 11 is an enlarged view of a portion VI shown in FIG. 9. In the present embodiment, the fixing branch 192 includes a snap. The first fixing member 180 includes a slot. It will be understood that in other embodiments, the fixing branch 192 includes the slot, and the first fixing member 180 includes the snap.

When the pushing portion 232 compresses, by the third engaging face 2321 being engaged with the fourth engaging face 1912, the fixing body 191 to cause the fixing body 191 to be deformed in the direction approaching the first cover 110, the fixing branch 192 is driven to expand outwards, and the snap is disengaged from the slot. In this way, the first fixing member 180 is disengaged from the second fixing member 190.

In the present embodiment, the second fixing member 190 includes two the fixing branches 192. The two the fixing branches 192 are connected to two opposite ends of the fixing body 191 respectively, and the two fixing branches 192 are arranged on a same side of the fixing body 191. The charging device 1 includes two first fixing members 180. One of the two first fixing members 180 is configured to engage with one of the two fixing branches 192, and the other one of the two first fixing members 180 is configured to engage with the other one of the two fixing branches 192. The above-mentioned configuration in the charging device 1 allows the first cover 110 to be fixed to the second cover 130 more firmly.

As shown in FIGS. 3 and 5, in the present embodiment, the charging device 1 further includes a resetting member 220. The resetting member 220 is configured to reset the second fixing member 190 and the operation member 210 after the second fixing member 190 is disengaged from the first fixing member 180.

The resetting member 220 may be, but is not limited to, a spring, an elastic silicone, an elastic rubber, and so on. An end of the resetting member 220 abuts against the second cover 130, and the other end of the resetting member 220 abuts against an end of the pushing body 231 away from the operation member 210. When the pushing body 231 is driven by the operation member 210 to move in the direction away from the operation member 210, the pushing member 230 compresses the resetting member 220, and the resetting member 220 is in a compressed state. After the second fixing member 190 is disengaged from the first fixing member 180, and when no pressure is applied to the operation member 210, the resetting member 220 is released and elongates to move the pushing body 231 in the direction approaching the operation member 210. Since the pushing portion 232 is connected to the pushing body 231, the pushing body 231 moves in the direction approaching the operation member 210 to drive the pushing portion 232 to move in the direction approaching the operation member 210. At this moment, the pushing portion 232 does not compresses the second fixing member 190, and the fixing branch 192 is not deformed and returns to a natural state.

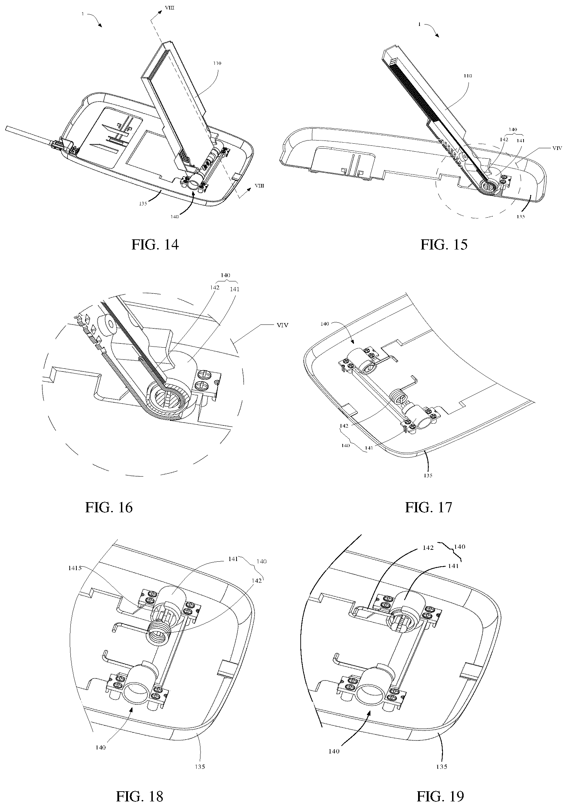

As shown in FIG. 12, FIG. 13, and FIG. 14, FIG. 12 is a schematic view of the charging device in the first state according to another embodiment of the present disclosure; FIG. 13 is a schematic view of the charging device shown in FIG. 12 being in the second state; and FIG. 14 is a schematic view of the charging device shown in FIG. 13 omitting partial components. In the present implementation, a position where the first fixing member 180 and the second fixing member 190 are disposed is different a position shown in the previous embodiment. In the above embodiment, the first fixing member 180 is disposed on the side wall of the first cover 110, and the second fixing member 190 is disposed on the side wall of the second cover 130. In the present embodiment, the second fixing member 190 is received in the receiving space 134, and accordingly, the first fixing member 180 is disposed on a side wall of the first cover 110 facing the second cover 130.

The second cover 130 includes a first sub-cover 135 and a second sub-cover 136. When the charging device is in the second state, the first sub-cover 135, with respect to the second sub-cover 136, is away from the first cover 110.

As shown in FIG. 14, the charging device 1 further includes a driving assembly 140. In order to facilitate illustration of the driving assembly 140, the charging device in FIG. 14 has some components omitted. The second sub-cover 136 of the second cover 130 is omitted, and some components of the first cover 110 is omitted. The driving assembly 140 is further configured to drive the first cover 110 to rotate relative to the second cover 130 when the first fixing member 180 is disengaged from the second fixing member 190. As shown in FIG. 15, FIG. 16, FIG. 17, FIG. 18, and FIG. 19, FIG. 15 is a cross-sectional view of the charging device shown in FIG. 14, taken along the line VIII-VIII; FIG. 16 is an enlarged view of a portion VIV shown in FIG. 15; FIG. 17 is a schematic view of partial components of the charging device shown in FIG. 12; FIG. 18 is a schematic view of the partial components of the charging device shown in FIG. 17, being viewed from another viewing angle; and FIG. 19 is a schematic view of the driving assembly being assembled with a first sub-shell. In order to illustrate a positional relationship between a position limiting member 141 and a driving member 142 of the driving assembly 140, one of two drive assemblies 140 in FIG. 17 and FIG. 18 is unassembled. The driving assembly 140 includes the position limiting member 141 and the driving member 142. The position limiting member 141 is fixed to the second cover 130, and specifically, fixed to the first sub-cover 135 of the second cover 130. An end of the driving member 142 is fixed to the position limiting member 141, and the other end of the driving member 142 is configured to drive the first cover 110 rotate relative to the second cover 130. When the driving member 142 drives the first cover 110 to rotate to reach a predetermined position, the driving member 142 is limited by the position limiting member 141 and cannot move any further. At this moment, the charging device 1 is in the second state.

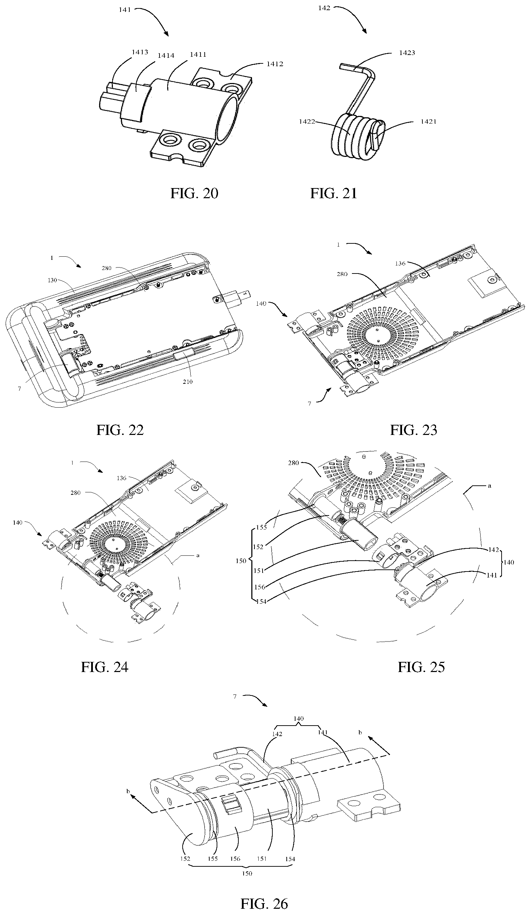

As shown in FIG. 20 and FIG. 21, FIG. 20 is a structural schematic view of the position limiting member according to an embodiment of the present disclosure; and FIG. 21 is a structural schematic view of the driving member according to an embodiment of the present disclosure. The position limiting member 141 includes a receiving portion 1411, a first fixing portion 1412, a second fixing portion 1413, and a position limiting portion 1414. The receiving portion 1411 has defines a receiving space 1415 (see FIG. 18). The receiving space 1415 is configured to receive at least part of the driving member 142. The first fixing portion 1412 is connected to the receiving portion 1411 and is configured to be fixed to the second cover 130 (in the present embodiment, fixed to the first sub-cover 135 of the second cover 130). In the present embodiment, the first fixing portion 1412 is fixed to the second cover 130 (a fixed member) by screws. The second fixing portion 1413 is connected to the receiving portion 1411 to fix at least part of the driving member 142. The position limiting portion 1414 is connected to the receiving portion 1411 to limit the extent of rotation of the first cover 110 (a to-be-driven member) driven by the driving member 142.

As shown in FIG. 21, the driving member 142 includes a third fixing portion 1421, a deformation portion 1422 and a driving portion 1423. The third fixing portion 1421 is fixed to the second fixing portion 1413. The deformation portion 1422 is connected to the third fixing portion 1421. When the charging device 1 is in the initial state, the deformation portion 1422 is deformed. When the first cover 110 is uncapped from the second cover 130, the deformation portion 1422 drives the driving portion 1423 to move to further drive the first cover 110 to rotate.

In the present embodiment, the charging device 1 further includes a heat dissipation member 280. The heat dissipation member 280 is fixed to the first cover 110 and is arranged on a side of the first cover 110 facing the second cover 130. The other end of the driving member 142 is received in a space between the heat dissipation member 280 and the first cover 110. Specifically, the driving portion 1423 of the driving member 142 is received in the space between the heat dissipation member 280 and the first cover 110.

Various components of the charging device 1 that is arranged with the driving cushion assembly 7 are described previously. It is understood that the charging device 1 described previously is only a specific embodiment of the driving cushion assembly 7 and shall not be interpreted as limiting the driving cushion assembly 7 provided by the present disclosure.

As shown in FIG. 22, FIG. 23, FIG. 24, and FIG. 25, FIG. 22 is a schematic view of the charging device omitting a portion of the first cover according to an embodiment of the present disclosure; FIG. 23 is a schematic view of the charging device shown in FIG. 22 omitting a portion of the second cover; and FIG. 24 is an exploded view of partial components shown in FIG. 23; and FIG. 25 is an enlarged view of a portion A shown in FIG. 24.

In the present embodiment, the charging device 1 further includes a cushion assembly 150. The cushion assembly 150 is configured to operate cooperatively with the driving assembly 140. The cushion assembly 150 and the driving assembly 140 form the driving cushion assembly 7. In the present embodiment, the driving cushion assembly 7 includes the driving assembly 140 and the cushion assembly 150. It will be understood that in other embodiments, the driving cushion assembly 7 includes other components in addition to the driving assembly 140 and the cushion assembly 150. Based on previous description, the driving assembly 140 is configured to drive the to-be-driven member to rotate. In this embodiment, the to-be-driven member is the first cover 110. In other words, the driving assembly 140 is configured to drive the first cover 110 to rotate with respect to the second cover 130. The cushion assembly 150 is configured to cushion a rotation speed of the first cover 110 when the first cover is rotating relative to the second cover 130. It will be understood that movement of the first cover 110 relative to the second cover 130 includes movement of the first cover 110 relative to the second cover 130 driven by the driving assembly 140, and further includes movement of the first cover 110 relative to the second cover 130 caused by a user wrenching the first cover 110 or other external forces instead of the driving force applied by the driving assembly 140. A structure of the cushion assembly 150 will be described in detail below.

An adapter 154 and a damping member 156 of the cushion assembly 150 are fixed to the heat dissipation member 280. The heat dissipation member 280 is fixed to the first cover 110. In other words, the adapter 154 and the damping member 156 of the cushion assembly 150 are fixed to the first cover 110 by the heat dissipation member 280. In other embodiments, the adapter 154 and the damping member 156 of the cushion assembly 7 may be fixed directly to the first cover 110.

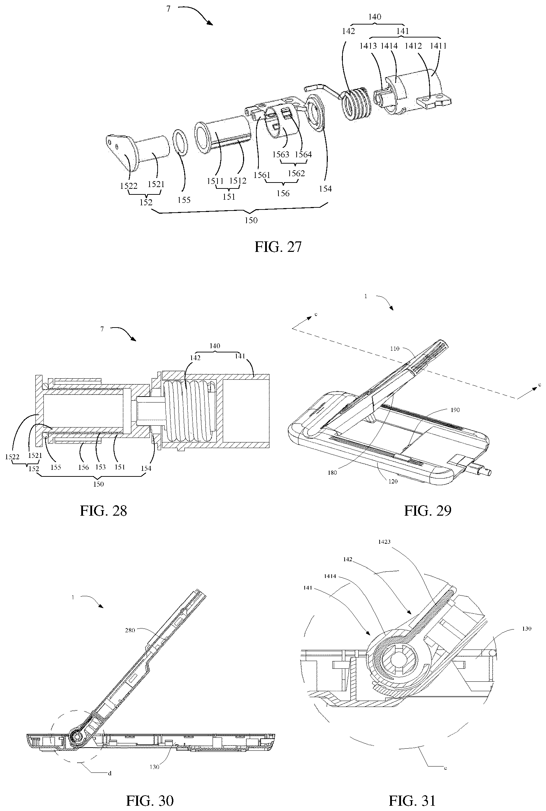

As shown in FIG. 26, FIG. 27, and FIG. 28, FIG. 26 is a perspective view of the driving cushion assembly; and FIG. 27 is an exploded view of the driving cushion assembly shown in FIG. 26; and FIG. 28 is a cross-sectional view of the driving cushion assembly shown in FIG. 26, taken along the line b-b. The cushion assembly 150 includes a first shaft sleeve 151, a second shaft sleeve 152, and a damping medium 153. The damping medium 153 is an oily substance, and thus, is not shown in FIG. 27. The first shaft sleeve 151 is fixed to the position limiting member 141, and the second shaft sleeve 152 is disposed inside the first shaft sleeve 151 and is rotatable with respect to the first shaft sleeve 151. A rotation gap is formed between the second shaft sleeve 152 and the first shaft sleeve 151. The damping medium 153 is received in the rotation gap. The damping medium 153 is configured to slow down relative movement between the first shaft sleeve 151 and the second shaft sleeve 152.

The first shaft sleeve 151 being fixed to the position limiting member 141 will be described as follows. The first shaft sleeve 151 is column structured. The first shaft sleeve 151 sleeves a circumference of the first fixing portion 1412 of the position limiting member 141 and is fixed to the end of the first fixing portion 1412 away from the receiving portion 1411. In the present embodiment, the first shaft sleeve 151 is fixed to the end of the receiving portion 1411 by arranging a fixing member (such as a screw) to extend through the first shaft sleeve 151 and to fix the first shaft sleeve 151 to the first fixing portion 1412.

The second shaft sleeve 152 may be hollow or solid, as long as the rotation gap can be formed between the second shaft sleeve 152 and the first shaft sleeve 151 when the second shaft sleeve 152 is sleeved inside the first shaft sleeve 151.

The damping medium 153 refers to a medium having a damping effect. The damping medium 153 slows down the relative motion between the first shaft sleeve 151 and the second shaft sleeve 152. When the relative motion between the first shaft sleeve 151 and the second shaft sleeve 152 is faster, the damping medium 153 may apply a greater impact on the first shaft sleeve 151 and the second shaft sleeve 152. For example, when no the damping medium 153 is arranged, a speed of the relative rotation between the first shaft sleeve 151 and the second shaft sleeve 152 is denoted as a first speed. When the damping medium is arranged, the speed of the relative rotation between the first shaft sleeve 151 and the second shaft sleeve 152 is denoted as a second speed. The second speed is less than the first speed.

The damping medium 153 may be a damping lotime. A type of the damping lotime is, but not limited to, any one or more of: polybutylene type damping lotime, polysiloxane type damping lotime, polybutylene-and-polysiloxane type damping lotime, ethylene, and olefin polymer type damping lotime.

Furthermore, the damping medium 153 in the driving cushion assembly 7 of the charging device 1 slows down the relative movement between the first shaft sleeve 151 and the second shaft sleeve 152, such that the first cover 110, when being driven by the driving cushion assembly 7, may not rotate excessively fast relative to the second cover 130. In this way, the to-be-charged device 5, which is carried on the first cover 110, may be prevented from being dropped due to the first cover 110 rotating excessively fast.

As shown in FIG. 25 to FIG. 27, the cushion assembly 150 further includes the adapter 154. A portion of the adapter 154 is configured to be fixed to the second cover 130. Another portion of the adapter 154 is sleeved by the position limiting member 141. The adapter 154 is rotatable relative to the position limiting member 141. An end of the second shaft sleeve 152 is further fixed to the adapter 154.

The end of the second shaft sleeve 152 is fixed to the adapter 154, enabling the driving cushion assembly 7 to be highly integrated. The adapter 154 may be fixed to the second cover 130 by, but not limited to, a screw, welding, and so on.

As shown in FIG. 25 to FIG. 27, the cushion assembly 155 further includes a seal member 155. The seal member 155 is configured to seal the rotation gap to prevent the damping medium 153 from leaking.

The seal member 155 may be ring shaped. The seal member 155 is arranged at and seal the rotation gap to prevent the damping medium 153 from leaking. The sealing member 155 may be made of silicone, rubber, plastic, and so on.

A specific structure of the second shaft sleeve 152 will be described in detail below. As shown in FIG. 26 to FIG. 28, the second shaft sleeve 152 includes a first sleeve body 1521 and a first retaining portion 1522. A portion of the first sleeve body 1521 is arranged inside the first shaft sleeve 151 and is rotatable with respect to the first shaft sleeve 151. The first retaining portion 1522 is disposed at an end of the first sleeve body 1521 away from the position limiting member 141 and protrudes out of a circumference of the first sleeve body 1521. The first retaining portion 1522 is fixed to the adapter 154. The seal member 155 sleeves the first shaft body 1521 and is received in a space defined by the first retaining portion 1522, the first sleeve body 1521, and the first shaft sleeve 151.

As shown in FIG. 26 to FIG. 28, the cushion assembly 150 further includes a damping member 156. The damping member 156 includes a second retaining portion 1561 and a damping portion 1562. The second retaining portion 1561 is fixed to the adapter 154. The damping portion 1562 sleeves a circumference of the second shaft sleeve 152. The damping portion 1562 is configured to cooperate with the second shaft sleeve 152 to limit a rotation angle of the damping portion 1562 with respect to the second shaft sleeve 152.

The second retaining portion 1561 may be fixed to the adapter 154 by, but not limited to, screws, welding, and so on. In the present embodiment, the second retaining portion 1561 is screwed to the adapter. The damping portion 1562 sleeves the circumference of the second shaft sleeve 152, and is disposed between the first retaining portion 1522 and a portion of the adapter 154 that sleeves the second fixing portion 1413.

As shown in FIG. 27, a specific structure of the damping portion 1562 will be described in detail below. The damping portion 1562 includes a damping body 1563 and an elastic portion 1564. The damping body 1563 sleeves the circumference of the first shaft sleeve 151. The elastic portion 1564 protrudes from and is connected to an inner wall of the damping body 1563. The first shaft sleeve 151 includes a second sleeve body 1511 and a protrusion 1512. The second sleeve body 1511 sleeves an outer side of the second shaft sleeve 152. The protrusion 1512 protrudes from and is connected to the outer side of the second sleeve body 1511. The protrusion 1512 interferes with the elastic portion 1564 to generate friction.

The elastic portion 1564 and the damping body 1563 may be configured as an integral and one-piece structure or separated from each other, as long as the elastic portion 1564 protrudes from and is connected to the inner wall of the damping body 1563. In the present embodiment, the elastic portion 1564 is separated from the damping body 1563. The elastic portion 1564 protrudes from and is connected the inner wall of the damping body 1563. Specifically, in this embodiment, the damping body 1563 has an opening that extends through a circumferential side wall of the damping body 1563. A portion of the elastic portion 1564 is fixed to an outer surface of the damping body 1563 and is disposed on opposite sides of the opening. Another portion of the elastic portion 1564 protrudes from and is fixed to the inner wall of the damping body 1563.

When the elastic portion 1564 is compressed by the protrusion 1512, the elastic portion 1564 is deformed, and friction is generated by interference between the protrusion 1512 and the elastic portion 1564. Effects generated by the friction due to the protrusion 1512 interfering with the elastic portion 1564 will be described in detail later by referring to configuration between the first cover 110 and the second cover 130 of the charging device 1.

In this embodiment, the damping portion 1562 includes two damping portions 1564. The two damping portions 1564 are spaced apart from each other. The first shaft sleeve 151 includes two protrusions 1512, and the two protrusions 1512 are spaced apart from each other.

When the damping member 156 is rotated with respect to the first shaft sleeve 151, the damping member 156may be eccentric. When the damping portion 1562 includes one elastic portion 1564, and when the first shaft sleeve 151 includes one protrusion 1512, the protrusion 1512 may not interfere with the elastic portion 1564 to generate the friction once the damping member 156 is eccentric with respect to the first shaft sleeve 151. In this embodiment, the damping portion 1562 includes two elastic portions 1564 that are spaced apart from each other, and the first shaft sleeve 151 includes two protrusions 1512 that are spaced apart from each other. In this way, the situation of the protrusion 1512 being unable to interfere with the elastic portion 1564, caused by the damping member 156 being eccentric with respect to the first shaft sleeve, may be avoided.

Functions of the driving cushion assembly 7 in the charging device 1 of the present disclosure will be described in detail below by referring to the charging device 1 provided in the present disclosure.

As shown in FIG. 29, FIG. 30, and FIG. 31, FIG. 29 is a schematic view of the charging device in the second state according to another embodiment of the present disclosure; FIG. 30 is a cross-sectional view of the charging device shown in FIG. 29, taken along the line c-c; and FIG. 31 is an enlarged view of a portion d shown in FIG. 30. In this embodiment, positions where the first fixing member 180 and the second fixing member 190 are disposed are different from the positions in the previous embodiments. In previous embodiments, the first fixing members 180 are disposed at both sides of the first cover 110, and the second fixing members 190 are disposed at both sides of the second cover 130. In the present embodiment, the first fixing member 180 is located at a face of the cover 110 facing the second cover 130. Accordingly, the second fixing member 190 is located at a middle of the second cover 130. The driving assembly 140 may drive the first cover 110 to rotate from the initial state to reach a position at which the first cover 110 has a first angle relative to the second cover 130. In other words, the angle between the first cover 110 and the second cover 130 may be driven to be adjusted when the driving member 142 moves, from zero degrees to the first angle. The first angle may be, but is not limited to, 50°. When the first angle is 50°, the driving member 142 may drive the first cover 110 to rotate relative to the second cover 130 in a range of 0° to 50°. Since the first cover body 110 is rotated from the initial state to reach the position of having the first angle relative to the second cover 130, in this case, it may be considered that in the range from 0° to the first angle, the first cover 110 may be automatically driven to be rotated when the driving assembly 140 moves, to reach a first position relative to the second cover 130. While the first cover 110 is driven to be rotated, by the driving assembly 140, from the initial state relative to the second cover 130 to reach the position of having the first angle with respect to the second cover 130, the damping medium 153 may enable the first cover 110 to rotate relative to the second cover 130 in a slower speed, such that the user may feel the rotating better.

Due to the position limiting member 141 being arranged, when the angle between the first cover 110 and the second cover 130 exceeds the first angle, the driving portion 1423 of the driving member 142 cannot drive the first cover 110 to further rotate.

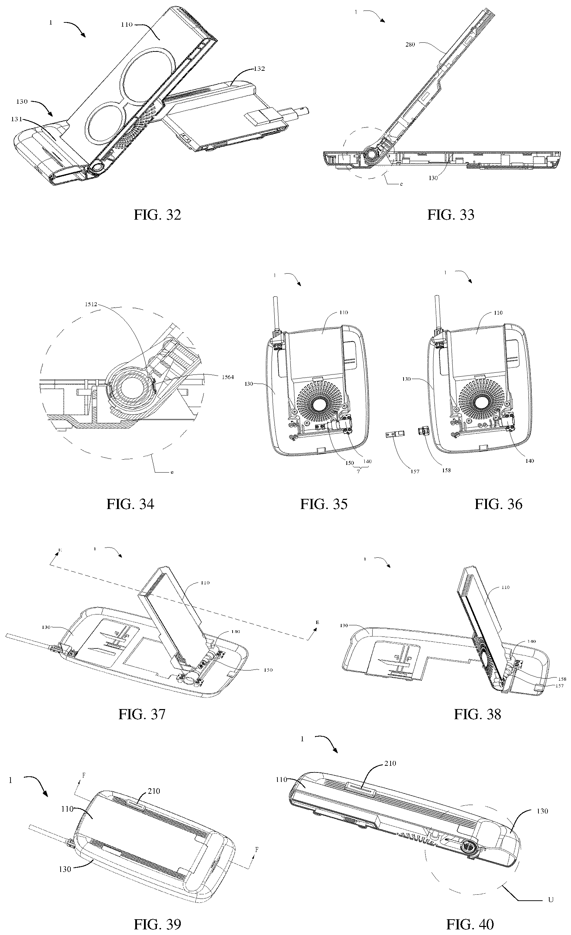

As shown in FIG. 32 to FIG. 34, FIG. 32 is a schematic view of partial components of the charging device in the second state shown in FIG. 29; and FIG. 33 is a cross-sectional view of the partial components shown in FIG. 32; and FIG. 34 is an enlarged view of a portion e shown in FIG. 33. The first cover 110 may be manually rotated from the first position to the second position and stopped at any position between the first position and the second position, under the action of the cushion assembly 150. That is, the first cover 110 may be manually rotated to the second position relative to the second cover 130 by manual actions performed by the user. The angle between the first cover 110 and the second cover 130 is a second angle when the first cover 110 is rotated to reach the second position relative to the second cover 130. The second angle may be, but is not limited to, 70°. When the first angle is 50° and the second angle is 70°, the first cover 110 may be driven by the driving member 142 to automatically rise to reach a position of being 50° relative to the second cover 130, and may be further rotated, by manual actions performed by the user, to reach a position of being 70°relative to the second cover 130.

Specifically, when the driving member 142 drives the first cover 110 to reach the position having the first angle relative to the second cover 130, the first cover 110 receives the force applied by the user to the first cover 110 and continues to rotate relative to the second cover 130. Due to the first shaft sleeve 151 and the damping member 156 of the cushion assembly 150, the first cover 110 may continue to move relative to the second cover 130 and may stop at any position between the first position and the second position by the friction generated by interference between the protrusion 1512 of the first shaft sleeve 151and the elastic portion 1564 of the damping member 156. That is, the first cover 110 and the second cover 130 may stop rotating, and the angle between the first cover 110 and the second cover 130 may be any angle between the first angle and the second angle.

The first portion 131 of the second cover 130 is configured to limit the angle between the first cover 110 and the second cover 130 generated by rotation of the first cover 110 when the first cover 110 is manually rotated by the user. Specifically, when the first cover 110 moves relative to the second cover 130 to abut against the first portion 131, the first cover 110 may not move further.

To summarize, for the charging device 1 provided in the present disclosure, when the first fixing member 180 is disengaged from the second fixing member 190, the driving assembly 140 drives the first cover 110 to rotate relative to the second cover 130 to reach the position where the angle between the first cover 110 and the second cover 130 is the first angle. When the user manually moves the first cover 110 to reach a position where the angle between the first cover 110 and the second cover 130 is any angle between the first angle and the second angle, the first cover 110 may stop rotating and stop at the position where the angle between the first cover 110 and the second cover 130 is any angle between the first angle and the second angle. When the angle between the first cover 110 and the second cover 130 is the second angle, the first cover 110 may not move further due to the position limiting slot 137 in the second cover 130 and the position limiting protrusion 117 on the first cover 110. The position limiting slot 137 in the second cover 130 and the position limiting protrusion 117 on the first cover 110 will be described later.

Based on the above description, the charging device 1 may have various forms, and can therefore, the user's demands of charging the to-be-charged device 5 in a various scenarios may be met.

As shown in FIG. 35 to FIG. 38, FIG. 35 is a schematic view of partial components of the charging device according to another embodiment of the present disclosure; FIG. 36 is a perspective view of the partial components of the charging device shown in FIG. 35; FIG. 37 is a schematic view of the charging device shown in FIG. 36 in the second state; and FIG. 38 is a cross-sectional view of the charging device shown in FIG. 37, taken along the line E-E. In this embodiment, an end of the cushion assembly 150 is connected to the driving assembly 140, and the other end of the cushion assembly 150 is fixed to the first cover 110. The cushion assembly 150 is configured to provide cushioning when the driving assembly 140 drives the first cover 110 to move.

In this embodiment, the cushion assembly 150 including a damper 157 and a sleeve 158. An end of the damper 157 is fixed to the first cover 110, and the other end of the damper 157 is fixed to the sleeve 158. The sleeve 158 is fixed to the position limiting member 141. The damper 157 may be fixed to the first cover 110 by, but not limited to, screws. The damper 157 may be fixed to the sleeve 158 by slotted connection to an inside of the sleeve 158. When the first cover 110 is rotated relative to the second cover 130, the damper 157 is functioning to slow down the movement of the first cover 110 relative to the second cover 130. For example, when the first cover 110 rises relative to the second cover 130, the damper 157 is functioning to slow down a speed that the first cover 110 rises, such that the first cover 110 rises at a moderate speed.

The angle between the first cover 110 and the second cover 130 may be driven to be adjusted when the driving member 142 moves, from zero degrees to the first angle. After the angle between the first cover 110 and the second cover 130 exceeds the first angle, due to the position limiting member 141, the driving portion 1423 of the driving member 142 cannot drive the first cover 110 to move further. At this moment, the first cover 110, which is moving at a lower speed, stops moving when rising to reach the position having the first angle relative to the second cover 130, due to the damper 157 and the gravity of the first cover 110 itself.

When the angle between the first cover 110 and the second cover 130 is the first angle, the first cover 110 is at the first position with respect to the second cover 130. When the first cover 110 is at the position having the first angle relative to the second cover 130, the user may manually move the first cover 110 by hand to drive the first cover 110 to move further, enabling the angle between the first cover 110 and the second cover 130 to be the second angle. For the first cover 110, in the process of rotating the first cover 110 to allow the angle between the first cover 110 and the second cover 130 to be adjusted from the first angle to the second angle, a resistance distance generated by the damper 157 is greater than a moment of the gravity of the first cover 110. In this way, the first cover 110 may stop at any position that has an angle between the first angle and the second angle relative to the second cover 130.

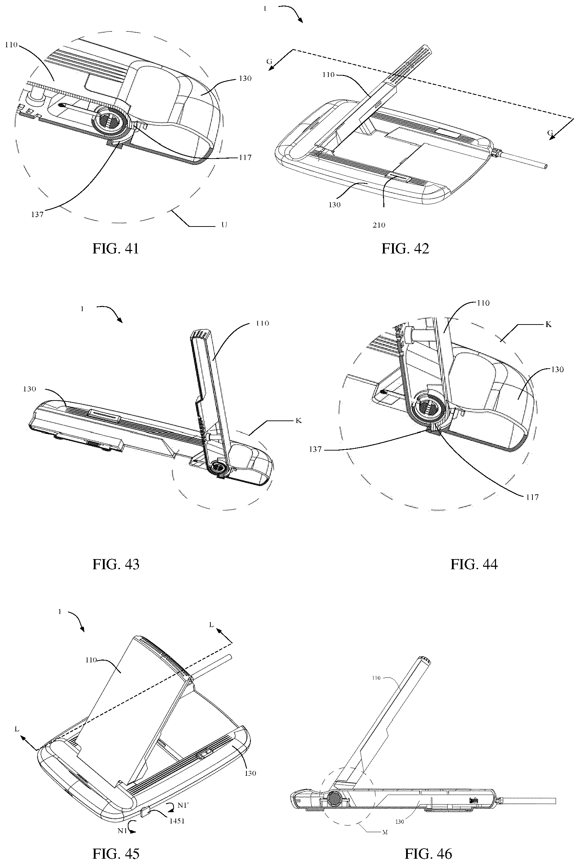

As shown in FIG. 39 to FIG. 44, FIG. 39 is a schematic view of the charging device in the first state according to another embodiment of the present disclosure; FIG. 40 is a cross-sectional view of the charging device shown in FIG. 39, taken along the line F-F; FIG. 41 is an enlarged view of a portion U shown in FIG. 40; FIG. 42 is a schematic view of the first cover disposed at the second position relative to the second cover of the charging device according to an embodiment of the present disclosure; FIG. 43 is a cross-sectional view of the structure shown in FIG. 42, taken along the line G-G; and FIG. 44 is an enlarged view of a portion K shown in FIG. 43. The second cover 130 has the position limiting slot 137, and the first cover 110 has a position limiting protrusion 117. When the first cover 110 is disposed at the second position relative to the second cover 130, the position limiting protrusion 117 of the first cover 110 abuts against a wall of the position limiting slot 137, and the first cover 110 may not move any further. Therefore, when the angle between the first cover 110 and the second cover 130 is the second angle, the first cover 110 may not move further due to the position limiting slot 137 of the second cover 130 and the position limiting protrusion 117 of the first cover 110.

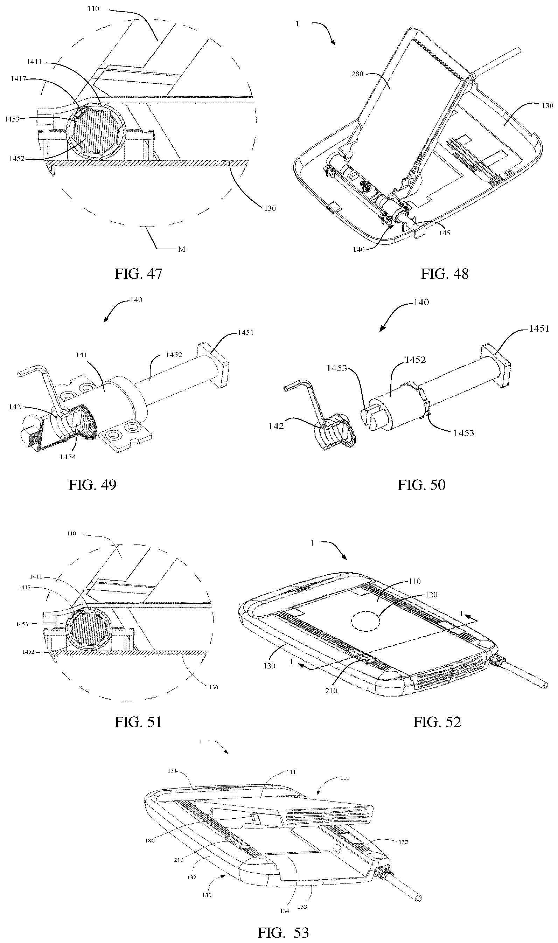

As shown in FIG. 45 to FIG. 50, FIG. 45 is a schematic view of the charging device according to another embodiment of the present disclosure; FIG. 46 is a cross-sectional view of the charging device shown in FIG. 45, taken along the line L-L; FIG. 47 is an enlarged view of a portion M shown in FIG. 46; FIG. 48 is a schematic view of a portion of the charging device show in FIG. 45; FIG. 49 is a schematic view of the driving assembly after being assembled; FIG. 50 is an exploded view of partial components of the driving assembly shown in FIG. 49. In this embodiment, the driving assembly 140 further includes an adjustment member 145. The adjustment member 145 is configured to adjust the amount of deformation of the driving member 142 when the charging device 1 is in the initial state where the first cover 110 is capped with the second cover 130.

By adjusting the amount of deformation of the driving member 142 at the initial state, the driving member 142 may drive the first cover 110 to move relative to the second cover 130 at various speeds after the first fixing member 180 is disengaged from the second fixing member 190. Generally, as the amount of deformation of the driving member 142 is large, due to the adjustment member 145, while the charging device 1 is in the initial state, the driving member 142 drives the first cover 110 to move relative to the second cover 130 at a larger speed after the first fixing member 180 is disengaged from the second fixing member 190. Conversely, as the amount of deformation of the driving member 142 is less, due to the adjustment member 145, while the charging device 1 is in the initial state, the driving member 142 drives the first cover 110 to move relative to the second cover 130 at a lower speed after the first fixing member 180 is disengaged from the second fixing member 190. Therefore, by arranging the adjustment member 145, the user may adjust, based on demands, the speed at which the driving member 142 drives the first cover 110 to rotate relative to the second cover 130, after the first fixing member 180 is disengaged from the second fixing member 190.

Specifically, the position limiting member further includes an elastic portion 1147. The elastic portion 1147 is arranged on an inner wall of the receiving portion 1411 defining the receiving space. The elastic portion 1147 may be, but is not limited to, an elastic sheet. The adjustment member 145 includes a rotating portion 1452, a plurality of adjustment portions 1453, and a fixing engagement portion 1454. The rotating portion 1452 is received in the receiving space, and is rotatable. The plurality of adjustment portions 1453 are disposed around a circumference of the rotating portion 1452. The plurality of adjustment portions 1453 are configured to cooperate with the elastic portion 1147. The fixing engaging portion 1454 is arranged at an end of the rotating portion 1452 and is configured to fix the driving member 142. When the rotating portion 1452 rotates, the rotating portion 1452 drives the plurality of adjustment portions 1453 to rotate to adjust the amount of deformation of the driving member 142 while the charging device 1 is at the initial state.

The adjustment member 145 further includes an operation portion 1451. The operation portion 1451 is connected to the rotating portion 1452 and is exposed out of the second cover 130. The operation portion 1451 is configured to receive an operation to drive the rotating portion 1452 to rotate.

A working principle of the adjustment member 145 will be explained below. As shown in FIG. 47 and FIG. 51, FIG. 51 is a schematic view of the adjustment portion compressing the elastic portion. The user may operate the operation portion 1451 of the adjustment member 145 to drive the adjustment member 145 to move in a direction N1 (counterclockwise) or in a direction Nl' (clockwise) opposite to the direction N1, as shown in FIG. 45. When the operation portion 1451 is not operated, the elastic portion 1147 is limited in a gap between two adjacent adjustment portions 1453. When the operation portion 1451 is rotated, the operation portion 1451 drives the plurality of adjustment portions 1453 to rotate to compress the elastic portion 1147. The elastic portion 1147 is deformed. After the rotating portion is rotated by a certain angle, the elastic portion 1147 is re-fixed between two adjacent adjustment portions 1453.

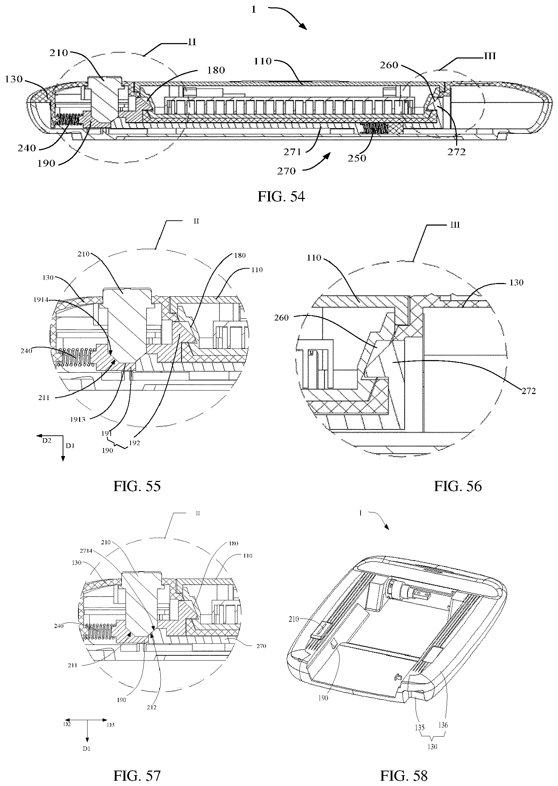

As shown in FIG. 52 to FIG. 55, FIG. 52 is a schematic view of the charging device in the first state according to an embodiment of the present disclosure; FIG. 53 is a schematic view of the charging device shown in FIG. 52 being in the second state; FIG. 54 is a cross-sectional view of the charging device shown in FIG. 52, taken along the line I-I; and FIG. 55 is an enlarged view of a portion II shown in FIG. 54. The charging device 1 includes the first cover 110, the charging member 120, the second cover 130, and the operation member 210. The first cover 110 is configured to carry the to-be-charged device. The first cover 110 is arranged with the first fixing member 180. The charging member 120 is carried in the first cover 110 and is configured to charge the to-be-charged device. The second cover 130 is arranged with the second fixing member 190. The second fixing member 190 is configured to engage with the first fixing member 180 to allow the first cover 110 to be capped with the second cover 130. The operation member 210 is arranged on the second cover 130. The operation member 210 is engaged with the second fixing member 190 by an inclined surface. When the operation member 210 is pressed, the operation member 210 drives the second fixing member 190 to be disengaged from the first fixing member 180.

An end of the first cover 110 is rotatably connected to an end of the second cover 130. When the first fixing member 180 is disengaged from the second fixing member 190, the end of the first cover 110 is separated from the end of the second cover 130. When the end of the first cover 110 is separated from one the of the second cover 130, the first cover 110 is driven by the driving assembly 140 (described in detail later) to reach a position having an angle relative to the second cover 130. At this moment, the charging device 1 is in the second state, also referred to as the standing charging state. When the charging device 1 is in the second state, the angle between the first cover 110 and the second cover 130 may be, but is not limited to, 30°, 50° or 70°.

For the charging device 1 provided in the present disclosure, the first fixing member 180 is engaged with the second fixing member 190, such that the first cover 110 is capped with the second cover 130. Therefore, the charging device 1 may charge the to-be-charged device 5 in the first state where the first cover 110 is engaged with the second cover 130. When the first fixing member 180 is disengaged from the second fixing member 190, the first cover 110 is separated from the end of the second cover 130 to allow the charging device 1 to enter the second state where the first cover 110 is separated from the second cover 130. The charging device 1 may charge the charging device 1 in the second state. Therefore, the user's demands of charging the to-be-charged device 5 in various scenarios may be met.

Furthermore, in the charging device 1 of the present disclosure, the operation member 210 may be engaged with the second fixing member 190 by the inclined surface. When the operation member 210 is pressed, a force generated by the operation member 210 being pressed downwards may be converted by the inclined surface into a force in another direction (in a lateral direction in this embodiment), such that the force in the another direction may drive the second fixing member 190 to be disengaged from the first fixing member 180. In this way, the first cover 110 being disengaged from the second cover 130 may be achieved by a relatively simple structure.

When the operation member 210 is arranged on the first cover 110, and when the first cover 110 is raised relative to the second cover 130, the user's hand may interfere with raising of the first cover 110 if the hand is not removed from the operation member 210 in time. Furthermore, since the first cover 110 rises, the first cover 110 may hit the user's hand if the hand is not removed from the operation member 210 in time. In this embodiment, the operation member 210 is arranged on the second cover 130. When the first cover 110 is separated from the second cover 130, the operation member 210 may not rise as the first cover 110 rises. Therefore, the user may perform operations on the operation member 210 conveniently. Further, the user's hand, which performs the operation on the operation member 210 may not interfere with rising of the first cover 110. In addition, rising of the first cover 110 may not hurt the user's hand when the operation member 210 is being operated.

As shown in FIG. 55, the second fixing member 190 includes the first fixing body 191 and the first fixing branch 192. The first fixing body 191 has a receiving slot 1913. A wall of the receiving slot 1913 facing the operation member 210 may be inclined. The first fixing branch 192 is fixed to the first fixing body 191. The first fixing branch 192 is configured to engage with the first fixing member 180 to allow the first cover 110 to be capped with the second cover 130. When the operation member 210 is pressed to move in the first direction D1, the first fixing branch 192 is driven to move in the second direction D2, such that the first fixing branch 192 is disengaged from the first fixing member 180.

Specifically, in this embodiment, the operation member 210 has a first engaging face 211. The first engaging face 211 is an inclined face away from a surface of the pushing member being pushed by the user. The receiving slot 1913 has a surface facing the operation member 210. The surface is denoted as the second engaging face 1914, and the second engaging face 1914 is an inclined face. When the operation member 210 is being pressed to move in the first direction D1 to compress the first fixing body 191 of the second fixing member 190, the first engaging face 211 abuts against and compresses the second engaging face 1914. Since each of the first engaging face 211 and the second engaging face is inclined, movement of the operation member 210 in the first direction D1 drives the first fixing body 191 to move in the second direction D2. Since the first fixing branch 192 is connected to the first fixing body 191, the first fixing body 191 drives the first fixing branch 192 to move in the second direction D2 to allow the first fixing branch 192 to be disengaged from the first fixing member 180. In this embodiment, the first direction D1 is a downward direction (i.e., a direction extending from the first cover 110 to the second cover 130), and the second direction D2 is to a rightward direction.

In this embodiment, the portion of the second fixing member 190 engaged with the first fixing member 180 is disposed out of the receiving space 134 (described in detail later) of the second cover 130. The portion of the second fixing member 190 engaging with the first fixing member 180 moves in the direction away from the receiving space 134 to allow the first fixing member 180 to be disengaged from the second fixing member 190. When the operation member 210 is pressed, the portion of the second fixing member 190 engaging with the first fixing member 180 is moved in the direction away from the receiving space 134, such that the first fixing member 180 is disengaged from the second fixing member 190.

In this embodiment, the first fixing body 191 is arranged inside the second cover 130. The end of the first fixing branch 192 away from the first fixing body 191 is exposed out of the second cover 130. In this embodiment, the first fixing member 180 is a recess defined in the first cover 110, and the first fixing branch 192 is a snap. In other embodiments, the first fixing member 180 is a snap, and the first fixing branch 192 is a branch having a recess. In other words, the first fixing member 180 and the second fixing member 190 are engaged with each other in a form of the snap being engaged into the recess.

As shown in FIG. 53, in this embodiment, the second cover 130 includes the first portion 131, the second portion 132, and the body portion 133. The first portion 131 is configured to be rotatably connected with the first cover 110. The first portion 131 is bent relative to and connected to the second portion 132. Both the first portion 131 and the second portion 132 protrude out of the body portion 133 and are disposed on a same side of the body portion 133. The first portion 131, the second portion 132 and the body portion 133 cooperatively define the receiving space 134. The receiving space 134 is configured to receive the first cover 110 when the first cover 110 and the second cover 130 are capped with each other.

The body portion 133, the first portion 131, and the second portion 132 may be configured as an integral and one-piece structure or may be separated from each other. When the charging device 1 is in the first state, the surface of the first cover 110 away from the second cover 130 is aligned with, or substantially aligned with, the surface of the first portion 131 away from the body portion 133. Accordingly, when the charging device 1 is in the first state, the surface of the first cover 110 away from the second cover 130 is aligned with, or substantially aligned with, the surface of the second portion 132 away from the body portion 133. In this way, the charging device 1 may have a relatively large carrying surface in the first state and may carry the to-be-charged device 5 more firmly, preventing the to-be-charged device 5 from slipping off from the first cover 110. Furthermore, since the charging member 120 is carried in the first cover 110, the first cover 110 is received in the receiving space 134 when the charging device 1 is in the first state. In this way, the first cover 110 and the charging member 120 carried in the first cover 110 may be prevented from being damaged by external impacts.

In this embodiment, two second portions 132 are arranged. The two second portions 132 are connected to two opposite ends of the first portion 131, respectively. The first portion 131 and the two the second portions 132 cooperatively define the receiving space 134. In this way, the charging device 1 may have a larger carrying surface when being in the first state, such that the charging device 1 may carry the to-be-charged device 5 more firmly, preventing the to-be-charged device 5 from slipping off from the first cover 110. In addition, the first cover 110 may be better protected against external impacts, and the first cover 110 and the charging member 120 carried in the first cover 110 may be prevented from being damaged by external impacts.

In this embodiment, the operation member 210 is arranged on the second portion 132. Arranging the operation member 210 on the second portion 132 refers to the operation member 210 being arranged at a side of the charging device 1, instead of the end of the charging device 1 opposite to the first portion 131. Technical effects of the charging device 1 of the present embodiment will be described below by comparing to the structure of the charging device 1 in the relevant technology (not prior art).

In the relevant technology, the operation member 210 is usually arranged at the tail end of the second cover 130. The tail end refers to the end of the second cover 130 that is opposite to the connection end 111 connected to the first cover 110. Arranging the operation member 210 at the tail end of the second cover 130 causes the distance between the connection end 111 of the second cover 130 and the tail end of the second cover 130 to be longer, such that the charging device 1 may not shortened.

For the charging device 1 provided by the present embodiment, the operation member 210 is arranged on the second portion 132. That is, the operation member 210 is arranged on the side wall between the connection end 111 and the tail end of the second cover 130. In this way, the distance between the connection end 111 of the second cover 130 and the tail end of the second cover 130 may be reduced, allowing the charging device 1 to be shortened. Alternatively, the space originally defined at the tail end of the second cover 130 may be used for other purposes.

Furthermore, in related technology, the operation member 210 is arranged at the tail end of the second cover 130. When the user presses the operation member 210 to release the first cover 110, the first cover 110 pops up and may potentially hit the hand of the user. For the charging device 1 provided by the present embodiment, the operation member 210 is arranged in the second portion 132, reducing or preventing the possibility that the first cover 110 hits the hand.

In this embodiment, the first cover 110 includes the connection end 111, the connection end 111 is rotatably connected to the first portion 131. The operation member 210 is arranged at the end of the second portion 132 away from the connection end 111.

In this embodiment, the operation member 210 is arranged at the end of the second portion 132 away from the connection end 111, such that the operation member 210 is not required to apply a relatively large force to disengage the first fixing member 180 from the second fixing member 190, achieving an effect of saving force application.

In this embodiment, as shown in FIG. 54 and FIG. 55, the charging device 1 further includes the first resetting member 240. The first resetting member 240 is arranged inside the second cover 130 and is configured to reset the first fixing body 191.

The resetting member 240 may be, but is not limited to, a spring, an elastic silicone, an elastic rubber, and so on. An end of the resetting member 240 abuts against the second cover 130, and the other end of the resetting member 240 abuts against the first fixing body 191. When the operation member 210 is pressed to move in the first direction D1, the operation member 210 drives the first fixing body 191 to move in the second direction D2 to compress the first resetting member 240, and the first resetting member 240 is in a compressed state. When the second fixing member 190 is disengaged from the first fixing member 180, and when the operation member 210 does not apply the pressure to the second fixing member 190, the first resetting member 240 is released and elongates to drive the second fixing member 190 to be reset.

As shown in FIG. 54, FIG. 56 and FIG. 57, FIG. 56 is an enlarged view of a portion III shown in FIG. 54; and FIG. 57 is an enlarged view of a portion II shown in FIG. 54. The charging device 1 further includes a third fixing member 260 and a fourth fixing member 270. The third fixing member 260 is arranged in the first cover 110 and is spaced apart from the first fixing member 180. The fourth fixing member 270 is arranged in the second cover 130 and is spaced apart from the second fixing member 190. The fourth fixing member 270 is configured to engage with the third fixing member 260 to cap the first cover 110 with the second cover 130. The operation member 210 is engaged with the fourth fixing member 270 by an inclined surface. When the operation member 210 is pressed, the operation member 210 drives the fourth fixing member 270 to be disengaged from the third fixing member 260.

For the charging device 1 of the present disclosure, the operation member 210 and the fourth fixing member 270 are engaged with each other by an inclined surface. When the operation member 210 is pressed, the operation member 210 and the second fixing member 190 convert the downward force, which is generated by the operation member 210 being pressed, into a force towards another direction (in this embodiment, a lateral force). The force towards another direction drives the fourth fixing member 270 to be disengaged from the third fixing member 260. In this way, the first cover 110 may be disengaged from the second cover 130 by a simpler structure.

In this embodiment, the operation member 210 has a third engaging face 212. The third engaging face 212 is an inclined face that is away from the operation member 210 and is operated by the user. The third engaging face 212 and the first engaging face 211 face different directions. The fourth fixing member 270 has a fourth engaging face 2714 facing the operation member 210. The fourth engaging face 2714 is an inclined face. When the operation member 210 is pressed to move in the first direction D1, the third engaging face 212 abuts against and compresses the fourth engaging face 2714. Since each of the third engaging face 212 and the fourth engaging face 2714 is inclined, movement of the operation member 210 in the first direction D1 drives the fourth fixing member 270 to move in a third direction D3, such that the fourth fixing member 270 is disengaged from the third fixing member 260. In this embodiment, the third direction D3 is opposite to the second direction D2. In other embodiments, the third direction D3 and the second direction D2 may not be opposite to each other.

In this embodiment, the face of the fourth fixing member 270 facing the operation member 210 is an inclined face. The face of operation member 210 facing the fourth fixing member 270 is an inclined face. When the operation member 210 is pressed to move in the first direction D1, the operation member 210 drives the second fixing member 190 to move in the second direction D2 and drives the fourth fixing member 270 to move in the third direction D3. The second direction D2 is opposite to the third direction D3.

As shown in FIG. 54, in this embodiment, the charging device 1 further includes a second resetting member 250. The second resetting member 250 is arranged inside the second cover 130 and configured to reset the fourth fixing member 270.

The second resetting member 250 may be, but is not limited to, a spring, an elastic silicone, an elastic rubber, and so on. An end of the second resetting member 250 abuts against the second cover 130, and the other end of the second resetting member 250 abuts against the fourth fixing member 270. When the operation member 210 is pressed to move in the first direction D1, the operation member 210 drives the fourth fixing member 270 to move in the third direction D3 to compress the second resetting member 250. The first resetting member 240 is in the compressed state. When the third fixing member 260 is disengaged from the fourth fixing member 270, and when the operation member 210 does not apply any pressure to the fourth fixing member 270, the second resetting member 250 is released and elongates to drive the fourth fixing member 270 to be reset.

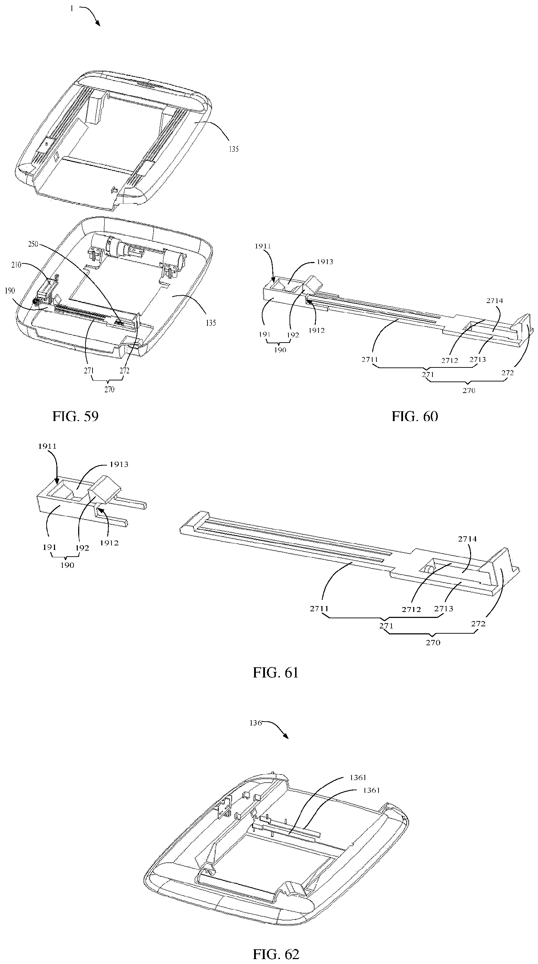

As shown in FIG. 54, FIG. 58, FIG. 59, FIG. 60, and FIG. 61, FIG. 58 is a schematic view of a portion of the charging device; FIG. 59 is an exploded view of the portion of the charging device shown in FIG. 58; FIG. 60 is a perspective view of the second fixing member being assembled with the fourth fixing member shown in FIG. 59; and FIG. 61 is an exploded view of the structure shown in FIG. 60. In FIG. 58, the first cover 110 of the charging device 1 and the components carried by the first cover 110 are omitted, and the second cover 130 and the components carried by the second cover 130 are illustrated. The fourth fixing member 270 includes a second fixing body 271 and a second fixing branch 272. An end of the second resetting member 250 is connected to the second fixing body 271, and the other end of the second resetting member 250 is connected to the second cover 130.

In this embodiment, the second fixing body 271 is arranged inside the second cover 130. An end of the second fixing branch 272 away from the second fixing body 271 is exposed out of the second cover 130. An end of the second fixing branch 272 away from the second fixing body 271 is exposed out of the second cover 130. In this embodiment, the third fixing member 260 is a recess defined in the first cover 110, and the second fixing branch 272 is a snap. In other embodiments, the third fixing member 260 is the snap, and the fourth fixing member 270 is a component having the recess. In other words, the third fixing member 260 and the fourth fixing member 270 are fixed to each other by the snap being engaged with the recess.

As shown in FIG. 60 and 61, the second fixing body 271 includes a fixing body portion 2711, a first connection arm 2712, and a second connection arm 2713. An end of the fixing body portion 2711 faces the operation member 210 and is configured to engage with the operation member 210. The first connection arm 2712 and the second connection arm 2713 are connected to the other end of the fixing body portion 2711. The first connection arm 2712 and the second connection arm 2713 are spaced apart from each other to define a gap 2714 to receive the second resetting member 250. The other end of the first connection arm 2712 and the other end of the second connection arm 2713 are connected to the second fixing branch 272.

The fourth fixing member 270 in this embodiment may take the space in the second fixing body 271 to receive the second resetting member 250, such that the charging device 1 may have a more compact structure, enabling the charging device 1 to be miniaturized.

As shown in FIG. 60 and 61, the first fixing body 191 has a first surface 1911 and a second surface 1912 connected to the first surface 1911. The receiving slot 1913 extends through the first surface 1911 and the second surface 1912. An end of the fourth fixing member 270 passes through an opening the receiving slot 1913 defined in the second surface 1912 and is received in the receiving slot 1913.

In this embodiment, the end of the fourth fixing member 270 may pass through the opening in the second surface 1912 and is received in the receiving slot 1913. In this way, the operation member 210 may be pressed only once to control both the second fixing member 190 and the fourth fixing member 270.

As shown in FIG. 58, FIG. 59, and FIG. 62, FIG. 62 is a rear view of the second sub-cover shown in FIG. 59. The second cover 130 includes a first sub-cover 135 and a second sub-cover 136. The first sub-cover 135, with respect to the second sub-cover 136, is disposed away from the first cover 110. The first sub-cover 135 and the second sub-cover 136 are engaged with each other to receive a part of the third fixing member 260 and a part of the fourth fixing member 270. The second sub-cover 136 is connected to the first sub-cover 135. A surface of the second sub-cover 136 facing the fourth fixing member 270 is arranged with a guiding member 1361. The guiding member 1361 is configured to guide the fourth fixing member 270 when the fourth fixing member 270 is moving.

The guiding member 1361 arranged on the second sub-cover 136 may guide a moving direction of the fourth fixing member 270, preventing the moving direction of the fourth fixing member 270 from being deviated, such that the fourth fixing member 270 may be disengaged from the third fixing member 260 successfully.

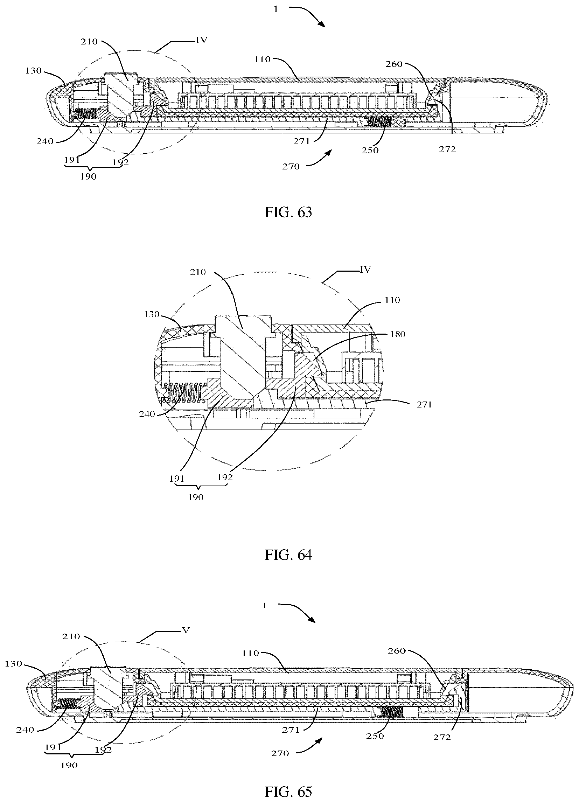

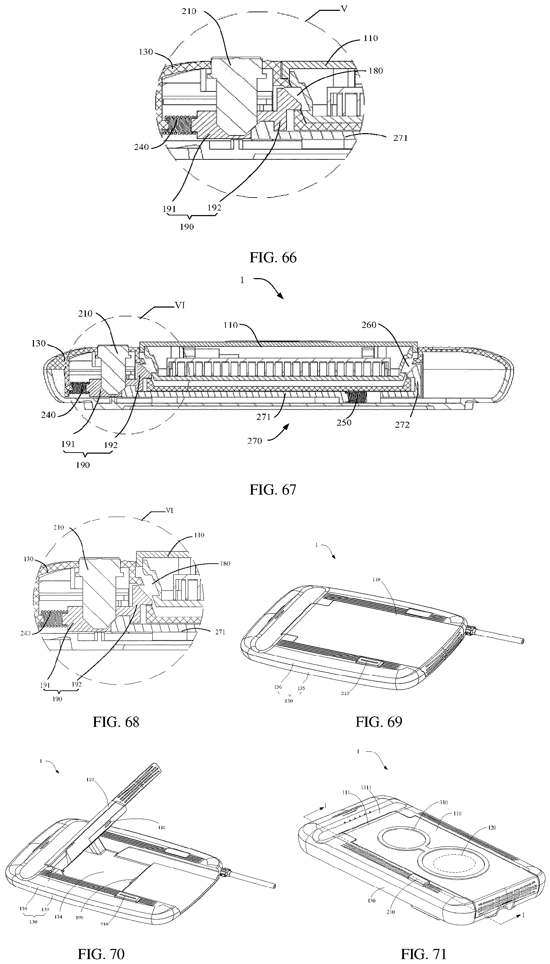

The process of the charging device 1 of the present disclosure being converted from the first state to the second state and converted from the second state to the first state will be described in detail below based on the charging device 1 provided in previous embodiments. As shown in FIG. 63, FIG. 64, FIG. 65, FIG. 66, FIG. 67, and FIG. 68, FIG. 63 is a cross-sectional view of the charging device in the first state according to an embodiment of the present disclosure; FIG. 64 is an exploded view of a portion IV shown in FIG. 63; FIG. 65 is a cross-sectional view of the first fixing member being semi-engaged with the second fixing member and the third fixing member semi-engaged with the fourth fixing member of the charging device; FIG. 66 is an enlarged view of a portion V shown in FIG. 65; FIG. 67 is a schematic view of the first cover of the charging device being just uncapped from the second cover of the charging device or the first cover being about to cap with the second cover; and FIG. 68 is an enlarged view of a portion VI shown in FIG. 67. A process from FIG. 63 to FIG. 65 and further to FIG. 16 may be interpreted as a process of converting the first cover 110 being capped with the second cover 130 into the first cover 110 being just uncapped with (separated from) the second cover 130. A process from FIG. 67 to FIG. 65 and further to FIG. 63 may be interpreted as a process of converting the first cover 110 being separated from the second cover 130 into the first cover 110 being capped with the second cover 130. When the charging device 1 is in the first state, and when the first cover 110 needs to be open relative to the second cover 130, the operation member 210 is pressed in the first direction D1. The operation member 210 compresses the second fixing member 190 and the fourth fixing member 270, causing the second fixing member 190 to compress the first resetting member 240 and to move in the second direction D2, and causing the fourth fixing member 270 to compress the second resetting member 250 and to move in the third direction D3. In this way, the first fixing branch 192 of the second fixing member 190 is disengaged from the first fixing member 180, and the second fixing branch 272 of the fourth fixing member 270 is disengaged from the third fixing member 260, such that the first cover 110 is disengaged from the second cover 130. The first cover 110 is disposed, driven by the driving assembly 140, at a position having an angle with respect to the second cover 130. At this moment, the charging device 1 is in the second state, also denoted as in the standing charging state.

When the first cover 110 is uncapped with the second cover body 130, the first resetting member 240 compresses the second fixing member 190 in a direction opposite to the second direction D2, such that the second fixing member 190 is reset. The second resetting member 250 compresses the fourth fixing member 270 in a direction opposite to the third direction D3, such that the fourth fixing member 270 is reset.

When the charging device 1 is in the second state, and when the first cover 110 needs to be capped with the second cover 130, the first cover 110 is pressed. The first cover 110 compresses the first fixing branch 192 and the second fixing branch 272. The first resetting member 240 and the second resetting member 250 are both compressed. When the first fixing branch 192 is fixed to the first fixing member 180, and when the second fixing branch 272 is fixed to the third fixing member 260, the first cover 110 is capped the second cover 130 again, such that the charging device 1 is in the first state again.

As shown in FIG. 69, FIG. 70, and FIG. 71, FIG. 69 is a schematic view of the charging device in the first state according to another embodiment of the present disclosure; and FIG. 70 is a schematic view of the charging device shown in FIG. 69 being in the second state. In this embodiment, the positions where the first fixing member 180 and the second fixing member 190 are arranged may be different from the positions in the previous embodiments. In the previous embodiments, the first fixing member 180 is disposed on the side wall of the first cover 110, and the second fixing member 190 is disposed on the side wall of the second cover 130. In the present embodiment, the second fixing member 190 is received in the receiving space 134. Accordingly, the first fixing member 180 is disposed on the side wall of the first cover 110 facing the second cover 130.

The second cover 130 includes the first sub-cover 135 and the second sub-cover 136. When the charging device 1 is in the second state, the first sub-cover 135, with respect to the second sub-cover 136, is away from the first cover 110.

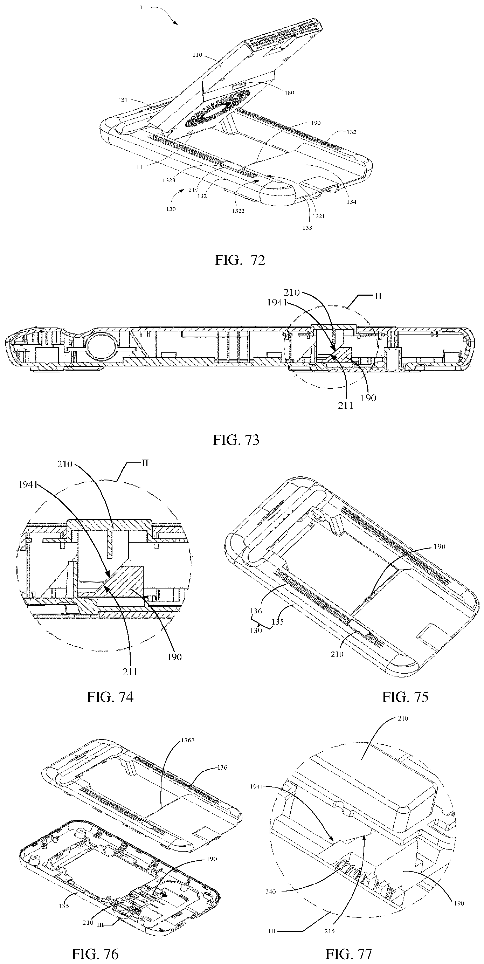

As shown in FIG. 71 to FIG. 74, FIG. 71 is a schematic view of the charging device in the first state according to an embodiment of the present disclosure; FIG. 72 is a schematic view of the charging device shown in FIG. 71 being in the second state; FIG. 73 is a cross-sectional view of the charging device shown in FIG. 71, taken along the line I-I; and FIG. 74 is an enlarged view of a portion II shown in FIG. 73. The charging device 1 includes the first cover 110, the first fixing member 180, the charging member 120, the second cover 130, the second fixing member 190 and the operation member 210. The first cover 110 is configured to carry the to-be-charged device. The first cover 110 has the connection end 111.The first cover 110 is arranged with the first fixing member 180. The charging member 120 is carried by the first cover 110 and is configured to charge the to-be-charged device. The second cover 130 is rotatably connected to the connection end 111 of the first cover 110. The second cover 130 is arranged with the second fixing member 190. The operation member 210 is arranged in the second cover 130. The operation member 210 has the first engaging face 211. The first engaging face 211 is an inclined face facing away from the connection end 111. An end of the second fixing member 190 has a second engaging face 1941, and the second engaging face 1941 is an inclined face facing towards the connection end 111. The other end of the second fixing member 190 is configured to engage with the first fixing member 180 to fix the first cover 110 and the second cover 130. When the operation member 210 is pressed, the operation member 210 is engaged with the second fixing member 190 by the first engaging face 211 and the second engaging face 1941 to retract the other end of the second fixing member 190 to the inside of the second cover 130 to disengage the first fixing member 180 from the second fixing member 190. In this way, the first cover 110 is separated from the second cover 130.

When the first fixing member 180 is disengaged from the second fixing member 190, an end of the first cover 110 is separated from an end of the second cover 130, and the other end of the first cover 110 is rotatably connected to the first portion 131. Therefore, in the second state, the first cover 110 is driven to be raised by the driving assembly 140 (described later), and an angle is formed between the first cover 110 and the second cover 130. The angle is a preset angle. Accordingly, the second state is also denoted as the vertical charging state. When the charging device 1 is in the second state, the preset angle may be, but is not limited to, 50° or 70°.

For the charging device 1 in the present disclosure, the first cover 110 can be capped with the second cover 130 by engaging the first fixing member 180 with the second fixing member 190. Therefore, the charging device 1 may charge the to-be-charged device 5 in the first state where the first cover 110 is capped with the second cover 130. Furthermore, when the first fixing member 180 is disengaged from the second fixing member 190, the end of the first cover 110 is separated from the end of the second cover 130, and the charging device 1 is in the second state. The charging device 1 may also charge the to-be-charged device 1 in the second state, such that the user's demands of charging the to-be-charged device 5 at various scenarios may be met.

When the operation member 210 is arranged on the first cover 110, and when the first cover 110 is raised relative to the second cover 130, the user's hand may interfere with raising of the first cover 110 if the hand is not removed from the operation member 210 in time. Furthermore, since the first cover 110 is raised, the first cover 110 may also hit the user's hand if the hand is not removed from the operation member 210 in time. In this embodiment, the operation member 210 is arranged on the second cover 130. When the first cover 110 is separated from the second cover 130, the operation member 210 does not rise as the first cover 110 rises. Therefore, the user may perform operations on the operation member 210 easily. The user's hand that performs the operation on the operation member 210 may not interfere with the raising of the first cover 110. In addition, raising of the first cover 110 does not hurt the user's hand while the hand is performing the operation on the operation member 210.

Furthermore, the operation member 210 has the first engaging face 211. The first engaging face 211 is the inclined face facing away from the connection end 111. Therefore, when the operation member 210 is pressed, the first engaging face 211 and the second engaging face 1941 may cooperatively enable the second fixing member 190 to move in the direction away from the connection end 111. In this way, the other end of the second fixing member 190 is retracted into the inside of the second cover 130, preventing the second fixing member 190 from being damaged while the first cover 110 is rising.

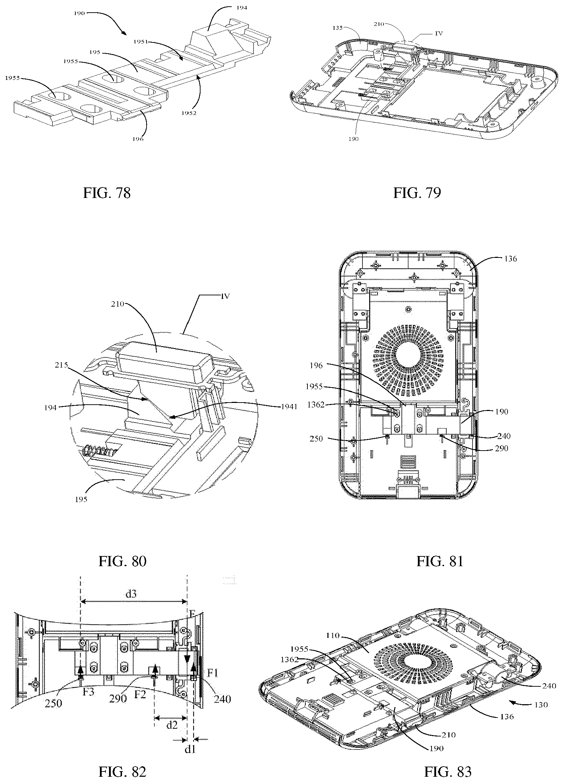

As shown in FIG. 75 to FIG. 80, FIG. 75 is a schematic view of a portion of the charging device according to an embodiment of the present disclosure; FIG. 76 is an exploded view of the structure shown in FIG. 75; FIG. 77 is an enlarged view of a portion III shown in FIG. 76; FIG. 78 is a schematic view of the second fixing member shown in FIG. 76; FIG. 79 is a schematic view of the structure shown in FIG. 75 omitting the second sub-cover; and FIG. 80 is an enlarged view of a portion IV shown in FIG. 79. In this embodiment, in order to illustrate the second cover 130 and the operation member 210 and the second fixing member 190 carried in the second cover 130, structures, such as the first cover 110 and components carried by the first cover 110 are omitted. In this embodiment, the second cover 130 includes the first sub-cover 135 and the second sub-cover 136. The first sub-cover 135 is disposed, with respect to the second sub-cover 136, away from the first cover 110. The second fixing member 190 is carried on the second sub-cover 136. The second sub-cover 136 has an opening 1363. The second fixing member 190 includes an operation portion 194 and a fixed engaging portion 196 connected to the operation portion 194. The operation portion 194 has the second engaging face 1941. The fixed engaging portion 196 may be exposed out of or retracted into the second cover 130 through the opening 1363.

The second fixing member 190 further includes a connection portion 195. The connection portion 195 has a first connection face 1951 facing the second sub-cover 136 and a second connection face 1952 connected to the first connection face 1951. The operation portion 194 is connected to a side of the connection portion 195 and protrudes out of the first connection face 1951 in a direction facing the second sub-cover 136. The fixed fitting portion 196 is connected to a side of the connection portion 195 and protrudes out of the second connection face 1952 in the direction facing the opening 1363.

For the configuration of the above-mentioned second fixing member 190, when the operation member 210 is pressed towards the first sub-cover 135, the fixed engaging portion 196 is driven to move in a direction away from the connection end 111. In this way, the second fixing member 190 is disengaged from the first fixing member 180. The structure of the second fixing member 190 is relatively simple and may be produced easily.

As shown in FIG. 78 and FIG. 81, FIG. 81 is a schematic view of the structure shown in FIG. 75 omitting the second sub-cover. The connection portion 195 defines a slide channel 1955 that extends through the first connection face 1951 and a surface opposite to the first connection face 1951. A surface of the second sub-cover 136 facing the first sub-cover 135 is arranged with a position limiting post 1362. The position limiting post 1362 is received in and extends through the slide channel 1955. The position limiting post 1362 is engaged with the slide channel 1955 to limit a direction of movement of the fixed engaging portion 196.

The position limiting post 1362 is engaged with the slide channel 1955 to allow the fixed engaging portion 196 to move in a direction away from the connection end 111 or towards the connection end 111. In this way, the fixed engaging portion 196 may not be shifted, ensuring the second fixing member 190 to properly extend out of the second cover 130 to engage with the first fixing member 180, and ensuring the second fixing member 190 to be properly retracted into the second cover 130 to be disengaged from the first fixing member 180.

In this embodiment, four slide channels 1955 are defined in the connection portion 195. Accordingly, four position limiting posts 1362 are arranged. All four slide channels 1955 extend in a same direction.

In this embodiment, an extending direction of the slide channel 1955 is the same as a direction of arranging the connection portion 195 and the fixed engaging portion 196. That is, the extending direction of the slide channel 1955 is the same as with a moving direction of the fixed engaging portion 196. In this way, a path that the fixed engaging portion 196 moves out of or retracts to the inside of the second cover 130 may be minimized. In other words, a distance that the slide channel 1955 moves relative to the position limiting post 1362 is equal to the distance that the fixed engaging portion 196 moves. It will be understood that in other embodiments, an angle may be formed between the extending direction of the slide channel 1955 and the direction in which the connection portion 195 and the fixed engaging portion 196 are arranged, as long as the movement of the slide channel 1955 relative to the position limiting post 1362 can drive the fixed engaging portion 196 to extend out of or retract to the inside of the second cover 130.

As shown in FIG. 77 and FIG. 81, the charging device 1 further includes a first resetting member 240. An end of the first reset resetting 240 abuts against the second cover 130, and the other end of the first resetting member 240 abuts against the second fixing member 190, such that the second fixing member 190 may be reset.

In this embodiment, the first resetting member 240 may be, but is not limited to, a spring, an elastic silicone, an elastic rubber, and so on. In the drawings of this embodiment, the first resetting member 240 is illustrated as a spring. An end of the first resetting member 240 abuts against the second cover 130, and the other end of the first resetting member 240 abuts against a side of the connection portion 195 away from the fixed engaging portion196. In this way, the first resetting member 240 is configured to reset the fixed engaging portion 196 after the first fixing member 180 is disengaged from the second fixing member 190, i.e., configured to extend the fixed engaging portion 196 out of the second cover 130.

In this embodiment, the first resetting member 240 is disposed corresponding to the end of the second fixing member 190 adjacent to the operation member 210. Specifically, the first resetting member 240 is disposed corresponding to a point where the connection portion 195 is connected to the operation portion 194. The first resetting member 240 having the above configuration allows the second fixing member 190 to be reset easily.

In this embodiment, the charging device 1 further includes a second resetting member 250. An end of the second resetting member 250 abuts against the second cover 130, and the other end of the second resetting member 250 abuts against the second fixing member 190. The second resetting member 250 and the first resetting member 240 are disposed at a same side of the second fixing member 190. The second resetting member 250 is disposed, with respect to the first resetting member 240, away from the operation member 210.

The second resetting member 250 may be, but is not limited to, a spring, an elastic silicone, an elastic rubber, and so on. In the drawings of this embodiment, the second resetting member 250 is illustrated as a spring. In this embodiment, an end of the second resetting member 250 abuts against the second cover 130, and the other end of the second resetting member 250 abuts against the side of the connection portion 195 away from the fixed engaging portion 196.

In this embodiment, the charging device 1 includes two resetting members: a first resetting member 240 and a second resetting member 250. In this way, the second fixing member 190 may be prevented or avoided from being shifted while being reset, such that the fixed engaging portion 196 in the second fixing member 190 may be prevented from being unable to extend out of the second cover 130.

In this embodiment, the charging device 1 further includes a third resetting member 290. An end of the third resetting member 290 abuts against to the second cover 130, the other end of the third resetting member 290 abuts against the second fixing member 190. The third reset member 290, the second resetting member 250, and the first resetting member 240 are disposed at a same side of the second fixing member 190, and the third resetting member 290 is disposed between the first resetting member 240 and the second resetting member 250.

The third resetting member 290 may be, but is not limited to, a spring, an elastic silicone, an elastic rubber, and so on. In the drawings of this embodiment, the third resetting member 290 is illustrated as a spring. In this embodiment, an end of the third resetting member 290 abuts against the second cover 130, and the other end of the third resetting member 290 abuts against the side of the connection portion 195 away from the fixed engaging portion 196.

The charging device 1 includes three resetting elements: the first resetting element 240, the second resetting element 250, and the third resetting element 290. In this way, the second fixing member 190 may be prevented or avoided from being shifted while being reset, such that the fixed engaging portion 196 in the second fixing member 190 may be prevented from being unable to extend out of the second cover 130.

After the second fixing member 190 has been reset, the fixing engaging portion 196 in the second fixing member 190 protrudes out of the second cover 130. When the first cover 110 is capped with the second cover 130, the first fixing member 180 in the first cover 110 is re-fixed to the fixing engaging portion 196 in the second fixing member 190. In this way, the first cover 110 is re-capped with the second cover 130.

In addition, the above-mentioned first resetting member 240, second resetting member 250 and third resetting member 290 are arranged to ensure that, after the second fixing member 190 is reset, the first cover 110 and the second cover body 130 are not shifted while the first cover 110 and the second cover body 130 are capping with each other, and the user may have a better feel.

As shown in FIG. 82, FIG. 82 is a schematic view of forces being applied to the second fixing member. The F in the drawings illustrates a position where a force is applied by pressing the operation member 210 when the first engaging face 211 is engaged with the second engaging face 1941. F1 indicates a thrust of the first resetting member 240. F2 indicates a thrust of the third resetting member 290. F3 indicates a thrust of the second resetting member 250. The d1 is a distance, in the extending direction of the connection portion 195, between the first resetting member 240 and the position of the first engaging face 211 and the second engaging face 1941 that receives the force. The d2 is a distance, in the extending direction of the connection portion 195, between the third resetting member 290 and the position of the first engaging face 211 and the second engaging face 1941 that receives the force. The d3 is a distance, in the extending direction of the connection portion 195, between the second resetting member 250 and the position of the first engaging face 211 and the second engaging face 1941 that receives the force. In this case, the equation of F1^{∗}d1=F2^{∗}d2+F3^{∗}d3 needs to be met to satisfy a moment balance. For example, F1=200g, d1=7mm, F2=50g, d2=14mm, F3=25g and d3=28mm are applied. In terms of configuration, in order to achieve F1=200g, F2=50g, and F3=25g, the first resetting member 240, the second resetting member 250 and the third resetting member 290 having a same coefficient of stiffness (for example, a compression spring having a coefficient of stiffness of 25g/mm) are arranged. When a preload amount on the first resetting member 240, the second resetting member 250, and the third resetting member 290 is required to be changed, the preload amount on the first resetting member 240 (at the position F1) may be 8mm, the preload amount on the third resetting member 290 (at the position F2) may be 2mm, and the preload amount on the second resetting member 250 (at the position F3) may be 1mm. The preload amount refers to a length obtained by a length of the resetting member in an un-compressed state subtracting a length of the resetting member after being compressed, and that is, the amount by which the resetting member is compressed.

In summary, the first resetting member 240, the second resetting member 250 and the third resetting member 290 have the same coefficient of stiffness. When the first fixing member 180 is engaged with the second fixing member 190 to fix the first cover 110 and the second cover 130, a length that the first resetting member 240 is being compressed is a first length L1, a length that the second resetting member 250 is being compressed is a second length L2, and a length that the third resetting member 290 is being compressed is a third length L3, and L1 > L3 > L2.

The first resetting member 240, the second resetting member 250 and the third resetting member 290 having the above configuration enable that the first cover 110 and the second cover 130 are not shifted when the first cover 110 is capped with the second cover 130, and user may have a better feel.

In this embodiment, the first fixing member 180 is a recess, and the other end of the second fixing member 190 is a snap. In other embodiments, the first fixing member 180 is the snap, and the other end of the second fixing member 190 has the recess. In other words, the first fixing member 180 is engaged with the second fixing member 190 by engaging the snap into the recess.

As shown in FIG. 72, the second cover 130 includes a body portion 133, a first portion 131 and a second portion 132. The first portion 131 is configured to be rotatably connected with the connection end 111 of the first cover 110. The first portion 131 and the second portion 132 are each protruding out of the body portion 133 and are disposed on a same side of the body portion 133. The body portion 133, the first portion 131 and the second portion 132 cooperatively define a receiving space 134. The receiving space 134 is defined to receive the first cover 110 when the first cover 110 is capped with the second cover 130. The second fixing member 190 is partially exposed to the inside of the receiving space 134. A portion of wires of the second fixing member 190 are received in the receiving space 134. When the first cover 110 is separated from the second cover 130, the body portion 133, the first portion 131 and the second portion 132 cooperatively protect the second fixing member 190 from being damaged.

The body portion 133, the first portion 131 and the second portion 132 may be configured as an integral and one-piece structure or as separated structures. When the charging device 1 is in the first state, the surface of the first cover 110 away from the second cover 130 is aligned with, or substantially aligned with, the surface of the first portion 131 away from the body portion 133. Accordingly, when the charging device 1 is in the first state, the surface of the first cover 110 away from the second cover 130 is aligned with, or substantially aligned with, the surface of the second portion 132 away from the body portion 133. In this way, the charging device 1 may have a larger carrying surface in the first state to carry the to-be-charged device 5 more firmly, preventing the to-be-charged device 5 from slipping off from the first cover 110. Furthermore, since the charging member 120 is carried in the first cover 110, when the charging device 1 is in the first state, the first cover 110 is received in the receiving space 134. In this way, the first cover 110 and the charging member 120 carried in the first cover 110 may be prevented from being damaged by external impacts.

In this embodiment, two second portions 132 are arranged. The two second portions 132 are connected to two opposite ends of the first portion 131, respectively. The first portion 131 and the two the second parts 132 cooperatively define the receiving space 134. The charging device 1 having the above configuration may have a larger carrying surface when being in the first state, such that the charging device 1 may carry the to-be-charged device 5 more firmly, preventing the to-be-charged device 5 from slipping off from the first cover 110. In addition, the first cover 110 is better protected, preventing the first cover 110 and the charging member 120 in the first cover 110 from being damaged caused by external impacts.

Further, the second portion 132 includes a third connection face 1321 and a fourth connection face 1322 connected to the third connection face 1321. The third connection face 1321 is connected to the body portion 133. The fourth connection face 1322 is connected to the third connection face 1321. The fourth connection face 1322 serves as a part of an exterior surface of the charging device 1. The fourth connection face 1322 defines a through hole 1323. The operation member 210 is disposed corresponding to the second portion 132 and extends through the through hole 1323.

The operation member 210 is disposed corresponding to the second portion 132. That is, the operation member 210 is located at a side end of a side of the charging device 1 but is not disposed at the tail end opposite to the first portion 131. Technical effects of the charging device 1 having the above configuration will be described below by comparing to the structure of the charging device 1 in the relevant technology (not prior art).

In the relevant technology, the operation member 210 may usually be arranged at the trail end of the second cover 130. The trail end refers to the other end of the second cover 130 opposite to the end connected to the connection end 111 of the first cover 110. Arranging the operation member 210 at the tail end of the second cover 130 allows the distance between the connection end 111 of the second cover 130 and the tail end of the second cover 130 to be longer, such that the charging device 1 may not be shortened.

For the charging device 1 in the present disclosure, the operation member 210 is disposed corresponding to the second portion 132. That is, the operation member 210 is arranged on the side wall between the connection end 111 and the tail end of the second cover 130. In this way, the distance between the connection end 111 and the tail end of the second cover 130 may be shortened, allowing the charging device 1 to be shortened. Alternatively, the space that is originally defined at the tail end of the second cover 130 may be used for other purposes.

Furthermore, in the related technology, when the operation member 210 is arranged at the tail end of the second cover 130, and when the user presses the operation member 210 to release the first cover 110, the first cover 110 pops up and may potentially hit the hand. For the charging device 1 in the present disclosure, the operation member 210 is arranged at the second portion 132, preventing the first cover 110 from hitting the hand.

As shown in FIG. 71, a surface of the first portion 131 away from the body portion 133 defines a recess 1311.

When the charging device 1 is in the second state, the first cover 110 is engaged with the first portion 131 to hold the to-be-charged device 5. That is, the to-be-charged device 5 may be limited by the recess 1311 in the first portion 131 and may not drop easily.

As shown in FIG. 71, the charging device 1 further includes an anti-slip member 310. The anti-slip member 310 is arranged on the outer surface of the first cover 110.

The anti-slip member 310 may be, but is not limited to, rubber, plastic, and so on. A roughness of the anti-slip member 310 is greater than that of the first cover 110, such that the to-be-charged device 1 may not easily slip off from the first cover 110 when being placed on the first cover 110.

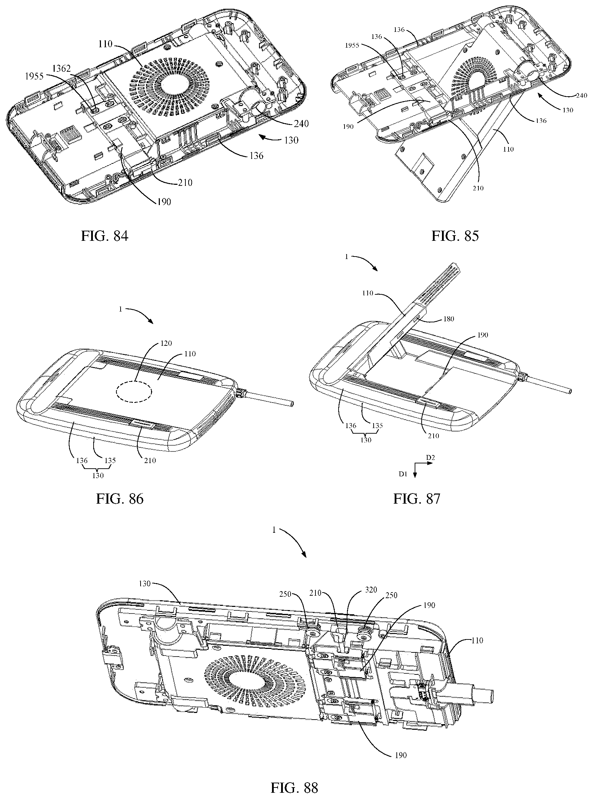

A process of the charging device of the present disclosure being converted from the first state to the second state and converted from the second state to the first state will be described in detail below based on the charging device 1 provided in the previous embodiments. As shown in FIG. 83, FIG. 84, and FIG. 85, FIG. 83 is a schematic view of partial components of the charging device being in the first state; FIG. 84 is a schematic view of the charging device shown in FIG. 83 being just uncapped or being about to be capped; and FIG. 85 is a schematic view of partial components of the charging device shown in FIG. 83 being in the second state. In order to illustrated a relationship between an action of the second fixing member and the state of the charging device, the first sub-cover 135 is omitted in FIGS. 83 to 85. A process from FIG. 83, FIG. 84 to FIG. 85 successively can be seen as a process of converting from a state where the first cover 110 being capped with the second cover 130, to a state where the first cover 110 being just uncapped from the second cover 130, and further to the state. When the charging device 1 is in the first state, and when the first cover 110 needs to be uncapped from the second cover 130, the operation member 210 is pressed, the operation member 210 compresses the second fixing member 190. The second fixing member 190 slides, driven by engagement between the slide channel 1955 and the position limiting post 1362, in a direction away from the connection and compresses the first resetting member 240, the second resetting member 250 and the third resetting member 290, until the second fixing member 190 is disengaged from the first fixing member 180.

After the second fixing member 190 is disengaged from the first fixing member 180, the first cover 110 is driven by the driving assembly 140 to rotate by a predetermined angle relative to the second cover 130, and an angle is formed between the first cover 110 and the second cover 130. At this moment, the charging device 1 is in the second state, also known as the standing charging state.

A process from FIG. 85 to FIG.84 and further to FIG.83 can be seen as a process of converting from the second state to a state where the first cover 110 and the second cover 130 are about to be capped with each other and further to the first state. When the charging device 1 is in the second state, the first resetting member 240, the second resetting member 250 and the third resetting member 290 compress the second fixing member 190, enabling the second fixing member 190 to protrude out of the second cover 130 again. When it is required to cap the first cover 110 with the third cover 130, the first cover 110 is pressed, the first cover 110 compresses the second fixing member 190, the second fixing member 190 compresses the second fixing member 190, and the second fixing member 190 is driven, by the engagement between the slide channel 1955 and the position limiting post 1362, to move in the direction away from the connection end 111 and to compress the first resetting member 240, the second resetting member 250 and the third resetting member 290. When the first fixing member 180 of the first cover 110 is aligned with the second fixing member 190, the second fixing member 190 is fixed again to the first fixing member 180 by the action of the first resetting member 240, the second resetting member 250 and the third resetting member 290. In this way, the charging device 1 enters the first state again.

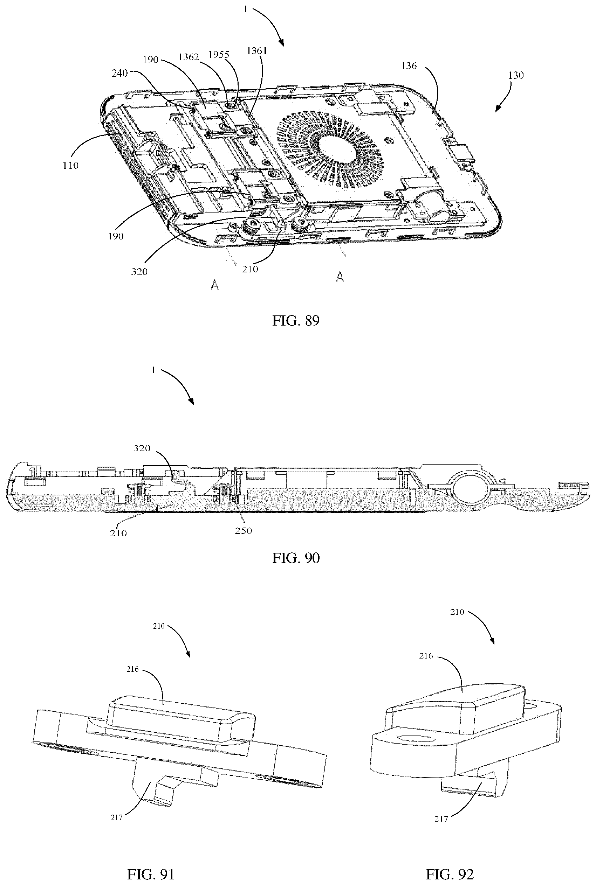

The present disclosure provides a charging device 1 as shown in FIG. 86 to FIG. 89, FIG. 86 is a schematic view of the charging device being in the first state according to an embodiment of the present disclosure; FIG. 87 is a schematic view of the charging device shown in FIG. 86 being in the second state; FIG. 88 is a schematic view of the charging device shown in FIG. 86 omitting a portion of the second cover; FIG. 85 is a schematic view of the structure shown in FIG. 88, being viewed from another viewing angle. A portion of the second cover of the charging device away from the first cover is removed from FIG. 88 and FIG. 89. The charging device 1 includes the first cover 110, the charging member 120, the second cover 130, the operation member 210 and a swinging member 320. The first cover 110 is configured to carry the to-be-charged device, and the first cover body 110 is arranged with the first fixing member 180. The charging member 120 is carried in the first cover 110 and is configured to charge the to-be-charged device. The second cover 130 is arranged with the second fixing member 190. The second fixing member 190 is configured to engage with the first fixing member 180 to enable the first cover 110 to be capped with the second cover 130. The operation member 210 is arranged on the second cover 130 and is configured to receive a pressing operation performed by the user. The swinging member 320 is movably connected to the second cover 130 and is configured to be driven by the operation member 210, when the operation member 210 is being pressed, to rotate. The swinging member 320 further drives the second fixing member 190 to be disengaged from the first fixing member 180 to allow the first cover 110 to be separated from the second cover 130.

For the charging device 1 in the present disclosure, the first fixing member 180 is engaged with the second fixing member 190 to allow the first cover 110 to be capped with the second cover 130. Therefore, the charging device 1 may charge the to-be-charged device 5 in the first state where the first cover 110 is capped with the second cover 130. When the first fixing member 180 is disengaged from the second fixing member 190, the end of the first cover 110 is separated from the end of the second cover 130, and the charging device 1 may enter the second state where the first cover 110 is separated from the second cover 130. The charging device 1 may charge the charging device 1 in the second state, such that the user's demand of charging the to-be-charged device 5 in various scenarios may be met.

Furthermore, the swinging member 320 in the charging device 1 in the present embodiment is movably connected to the second cover 130 and may be driven, by the operation member 210, to rotate when the operation member 210 is being pressed. Further, the swinging member 320 drives the second fixing member 190 to be disengaged from the first fixing member 180. In the present embodiment, the charging device has a relatively simple structure to allow the first cover 110 to be disengaged from the second cover 130, and the disengagement may be performed easily.

When the operation member 210 is arranged on the first cover 110, and when the first cover body 110 is raised relative to the second cover 130, the user's hand may interfere with the raising of the first cover 110 if the hand is not removed from the operation member 210 in time. Furthermore, when the hand is not removed from the operation member 210 in time, the first cover 110 may hit the user's hand. In this embodiment, the operation member 210 is arranged on the second cover 130. When the first cover 110 is separated from the second cover 130, the operation member 210 may not rise as the first cover 110 rises. Therefore, the user may perform operations on the operation member 210 easily, and the user's hand that performs the operation on the operation member 210 may not interfere with the raising of the first cover 110. In addition, the raising of the first cover 110 may not cause damage to the user's hand when the hand is performing the operation on the operation member 210.

As shown in FIG. 90, FIG. 91, and FIG. 92, FIG. 90 is a cross-sectional view of the structure shown in FIG. 89, taken along the line A-A; FIG. 91 is a perspective view of the operation member according to an embodiment of the present disclosure; and FIG. 92 is a perspective view of the operation member shown in FIG. 91, being viewed from another viewing angle. The operation member 210 includes a pressing portion 216 and a contact portion 217. The pressing portion 216 is configured to receive the pressing operation. The contact portion 217 is connected to the pressing portion 216 and is configured to be driven, by the pressing portion 216, to contact the swinging member 320 to drive the swinging member 320 to rotate.

In this embodiment, the pressing portion 216 is partially exposed out of the second cover 130 to be pressed by the user. When the charging device 1 is in the first state, the pressing portion 216 partially protrudes out of the second cover 130. It will be understood that in other embodiments, when the charging device 1 is in the first state, the pressing portion 216 is aligned with or recessed from a surface of the second cover 130 that is arranged with the pressing portion 216, as long as the pressing portion 216 can be pressed by the user. Understandably, the pressing portion 216 may be pressed by the user by hand or by a pressing tool.

The contact portion 217 is connected to the pressing portion 216. The contact portion 217 is arranged on a surface opposite to a pressing surface of the pressing portion 216. When the charging device 1 is in the first state, the contact portion 217 is spaced apart from or abuts against the swinging member 320. In this embodiment, when the charging device 1 is in the first state, the contact portion 217 is spaced apart from the swinging member 320, and the swinging member 320 is disposed on a side of the contact portion 217 away from the pressing portion 216. When the pressing portion 216 is pressed, the contact portion 217 is driven, by movement of the pressing portion 216, to move towards the swinging member 320 to further drive the swinging member 320 to rotate.

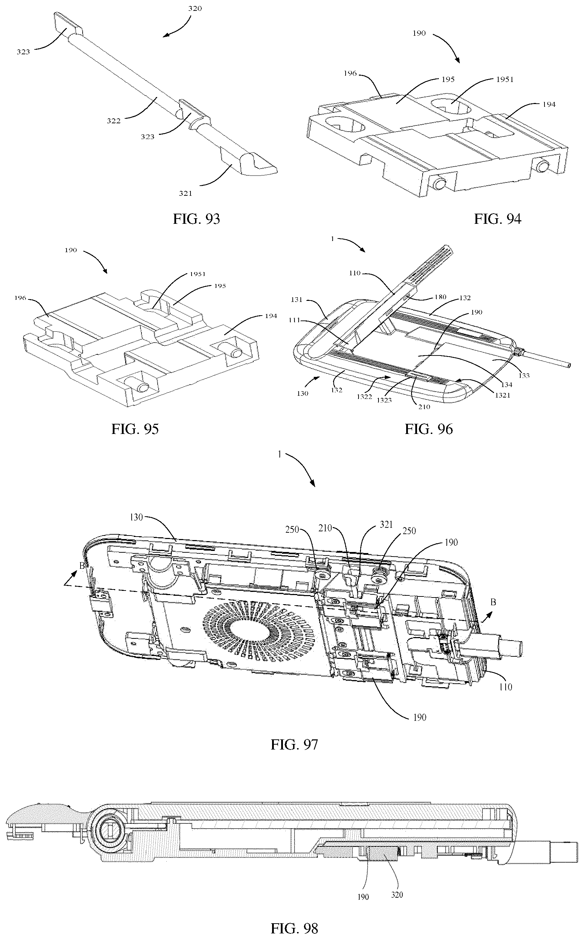

As shown in FIG. 93, FIG. 93 is a perspective view of the swinging member according to an embodiment of the present disclosure. The swinging member 320 includes a flipping portion 321, a connection rod section 322 and a pushing portion 323. The flipping portion 321 is arranged on a side of the contact portion 217 away from the pressing portion 216. The flipping portion 321 is configured to flip driving by the contact portion 217. The connection rod portion 322 is connected to the flipping portion 321 and may rotate driven by the flipping portion 321 being flipping. The pushing portion 323 is connected to the connection rod portion 322 and is spaced apart from the flipping portion 321. The pushing portion 323 is configured to push the second fixing member 190, such that the second fixing member 190 is driven to be disengaged from the first fixing member 180.

The flipping portion 321 is used to be driven, by the contact portion 217, to flip to drive the connection rod portion 322 to rotate. The connection rod portion 322 is rod-shaped or strip-shaped. When the connection rod portion 322 is rotating, the connection rod portion 322 drives the pushing portion 323, which is connected to the connection rod portion 322, to move to further push the second fixing member 190, allowing the second fixing member 190 to be disengaged from the first fixing member 180.

As shown in FIG. 94 and FIG. 95, FIG. 94 is a perspective view of the operation member according to an embodiment of the present disclosure; and FIG. 95 is a perspective view of the operation member shown in FIG. 94, being viewed from another viewing angle. The second fixing member 190 includes an operation portion 194, a connection portion 195 and a fixed engaging portion 196. The operation portion 194 is configured to engage with the pushing portion 323 and is driven by the pushing portion 323 to move. The connection portion 195 is connected to the operation portion 194. The fixed engaging portion 196 is connected to the connection portion 195. The fixed engaging portion 196 is configured to engage with the first fixing member 180 and is driven by the pushing portion 323 to move to be disengaged from the first fixing member 180. In this embodiment, the operation portion 194 has a receiving sub-portion 1941, the receiving sub-portion 1941 is configured to receive the pushing portion 323. The receiving sub-portion 1941 includes a recess or a through hole.

In this embodiment, the charging device 1 includes two first fixing members 180 that are spaced apart from each other and two second fixing members 190 that are spaced apart from each other. One of the two first fixing members 180 is engaged with one of the two second fixing members 190. For the charging device 1 in this embodiment, engagement between the two first fixing members 180 and the two second fixing members 190 allows the first cover 110 to be capped with the second cover 130 more firmly. When the charging device 1 includes the two second fixing members 190 that are spaced apart from each other, the swinging member 320 includes two pushing portions 323. The two pushing portions 323 being spaced apart from each other. One of the two pushing portions 323 corresponds to one of the two second fixing members 190, and the other one of the two pushing portions 323 corresponds to the other one of the two second fixing members 190.

In other embodiments, the charging device 1 includes at least one second fixing member 190, the number of pushing portions 323 is equal to the number of second fixing members 190 included in the swinging member 320. One pushing portion 323 corresponds to one second fixing member 190.

As shown in FIG. 89 and FIG. 94, the connection portion 195 has a slide channel 1955, and the second cover 130 has a position limiting post 1362. The position limiting post 1362 is received in the slide channel 1955, and the connection portion 195 is movable relative to the second cover 130 through the slide channel 1955.

Engagement between the position limiting portion and the slide channel 1955 may define a moving direction of the second fixing member 190, allowing the fixed engaging portion 196 to move in a direction away from the connection end 111 or approaching the connection end 111, such that the fixed engaging portion 196 is prevented from being shifted, and it is ensured that the second fixing member 190 may properly extend out of the second cover 130 to be engaged with the first fixing member 180, and ensured that the second fixing member 190 may properly be retracted into the second cover 130 to be disengaged from the first fixing member 180.

In this embodiment, the extending direction of the slide channel 1955 is the same as a direction in which the connection portion 195 and the fixed engaging portion 196 are arranged. That is, the extending direction of the slide channel 1955 is the same as the moving direction of the fixed engaging portion 196. In this way, a distance of a path that the fixed engaging portion 196 moves out of or retracts into the second cover 130 can be minimized. In other words, a distance that the slide channel 1955 moves relative to the position limiting post 1362 is equal to a distance that the fixed engaging portion 196 moves. It will be understood that in other embodiments, a certain angle may be formed between the extending direction of slide channel 1955 and the direction in which the connection portion 195 and the fixed engaging portion 196 are arranged, as long as movement of the slide channel 1955 relative to the position limiting post 1362 can drive the fixed engaging portion 196 to extend out of or retract into the second cover 130.

In this embodiment, two slide channels 1955 are defined in the connection portion 195. Accordingly, two position limiting posts 1362 are arranged. All slide channels 1955 extend in a same direction. Since two slide channels 1955 are defined in the connection portion 195, engagement between the two slide channels 1955 and the two position limiting posts 1362 prevents the second fixing member 190 from being deflected during moving, such that a situation of the second fixing member 190 being unable to be engaged with or disengaged from the first fixing member 180, caused by the second fixing member 190 from being deflected during moving, may be avoided.

In this embodiment, the two slide channels 1955 are provided side by side. The direction in which the two slide channels 1955 are arranged is perpendicular to the extending direction of the slide channels 1955. In this embodiment, the slide channels 1955 having the above configuration may further ensure the second fixing member 190 to not deflect during moving, such that the situation of the second fixing member 190 being unable to be engaged with or disengaged from the first fixing member 180, caused by the second fixing member 190 from being deflected during moving, may be avoided.

As shown in FIG. 86 and FIG. 89, the second cover 130 includes a first sub-cover 135 and a second sub-cover 136. With respect to the first sub-cover 135, the second sub-cover 136 is located closer to the first cover 110. The second sub-cover 136 is arranged with the position limiting post 1362 and defines an opening 1361. The opening 1361 is configured to allow the fixed engaging portion 196 to extend out of or retract into the space defined by the first sub-cover 135 and the second sub-cover 136.

As shown in FIG. 89, the charging device 1 further includes the first resetting member 240. The first resetting member 240 is arranged inside the second cover 130 and configured to reset the second fixing member 190 after the first fixing member 180 being disengaged from the second fixing member 190.

The first resetting member 240 may be, but is not limited to, a spring, an elastic silicone, an elastic rubber, and so on. An end of the first resetting member 240 abuts against the second cover 130, and the other end of the first resetting member 240 abuts against the second fixing member 190. When the operation member 210 is being pressed to move in the first direction D1 (see FIG. 87), the swinging member 320 is driven to rotate to further drive the second fixing member 190 to move in the second direction D2 to compress the first resetting member 240. The first resetting member 240 is in a compressed state. When the second fixing member 190 is disengaged from the first fixing member 180, the first resetting member 240 is released and elongates to drive the second fixing member 190 to be reset.

As shown in FIG. 88, the charging device 1 further includes the second resetting member 250. The second resetting member 250 is arranged inside the second cover 130 and is configured to reset the operation member 210.

The second resetting member 250 may be, but is not limited to, a spring, an elastic silicon, an elastic rubber, and so on. The second resetting member 250 is compressed when the operation member 210 is pressed to move towards the first direction D1. When the force applied to the operation member 210 is released, the second resetting member 250 moves in a direction opposite to the first direction D1 to reset the operation member 210, and the user may perform a next operation on the operation member 210.

As shown in FIG. 96, FIG. 96 is a schematic view of the charging device being in the second state according to an embodiment of the present disclosure. The second cover 130 has the receiving space 134 to receive the first cover 110. At least part of the second fixing member 190 is received in the receiving space 134.

At least part of the second fixing member 190 is received in the receiving space 134. In this embodiment, at least a part of the fixed engaging portion 196 is received in the receiving space 134. Since at least part of the second fixing member 190 is received in the receiving space 134, damage to the second fixing member 190, caused by any impact when the first cover 110 is separated from the second cover 130, may be prevented.

As shown in FIG. 96, the second cover 130 includes the first portion 131, the second portion 132 and the body portion 133. The first portion 131 is configured to rotatably connected with the first cover 110. The first portion 131 is bent relative to and connected to the second portion 132. The first portion 131 and the second portion 132 are each protruding out of the body portion 133 and are arranged on a same side of the body portion 133. The first portion 131, the second portion 132 and the body portion 133 cooperatively define the receiving space 134. The receiving space 134 is configured to receive the first cover 110 when the first cover 110 and the second cover 130 are capped with each other.

The body portion 133, the first portion 131 and the second portion 132 may be configured as an integral and one-piece structure or as separated components. When the charging device 1 is in the first state, the surface of the first cover 110 away from the second cover 130 is aligned with, or substantially aligned with, the surface of the first portion 131 away from the body portion 133. Accordingly, when the charging device 1 is in the first state, the surface of the first cover 110 away from the second cover 130 is aligned with, or substantially aligned with, the surface of the second portion 132 away from the body portion 133. In this way, the charging device 1 may have a larger carrying surface in the first state and may carry the to-be-charged device 5 more firmly, preventing the to-be-charged device 5 from slipping off from the first cover 110. Furthermore, since the charging member 120 is carried in the first cover 110, the first cover 110 is received in the receiving space 134 when the charging device 1 is in the first state, preventing the first cover 110 and the charging member 120 carried in the first cover 110 from being damaged by external impacts.

In this embodiment, two second portions 132 are arranged and are connected to two opposite ends of the first portion 131 respectively. The first portion 131 and the two second portions 132 cooperatively define the receiving space 134. In this way, the charging device 1 may have a larger carrying surface when being in the first state, such that the charging device 1 may carry the to-be-charged device 5 more firmly, preventing the to-be-charged device 5 from slipping off from the first cover 110. In addition, the first cover 110 is better protected, preventing the first cover 110 and the charging device 120 in the first cover 110 from being damaged by external impacts.

Further, the second portion 132 includes a third connection face 1321 and a fourth connection face 1322 connected to the third connection face 1321. The third connection face 1321 is connected to the body portion 133. The fourth connection face 1322 is connected to the third connection face 1321 and serves as a part of the exterior surface of the charging device 1. The fourth connection face 1322 defines a through hole 1323. The operation member 210 is disposed corresponding to the second portion 132 and extends through the through hole 1323.

The operation member 210 is disposed corresponding to the second portion 132, i.e., the operation member 210 is disposed at a side end of a side of the charging device 1, instead of at the end opposite to the first portion 131. Technical effects of the charging device 1 having the above configuration will be described below by comparing to the structure of the charging device 1 in the relevant technology (not prior art).

In the relevant technology, the operation member 210 may usually be arranged at the trail end of the second cover 130. The trail end refers to the other end of the second cover 130 opposite to the end connected to the connection end 111 of the first cover 110. Arranging the operation member 210 at the tail end of the second cover 130 allows the distance between the connection end 111 of the second cover 130 and the tail end of the second cover 130 to be longer, such that the charging device 1 may not be shortened.

For the charging device 1 in the present disclosure, the operation member 210 is disposed corresponding to the second portion 132. That is, the operation member 210 is arranged on the side wall between the connection end 111 and the tail end of the second cover 130. In this way, the distance between the connection end 111 and the tail end of the second cover 130 may be shortened, allowing the charging device 1 to be shortened. Alternatively, the space that is originally defined at the tail end of the second cover 130 may be used for other purposes.

Furthermore, in the related technology, when the operation member 210 is arranged at the tail end of the second cover 130, and when the user presses the operation member 210 to release the first cover 110, the first cover 110 pops up and may potentially hit the hand. For the charging device 1 in the present disclosure, the operation member 210 is arranged at the second portion 132, preventing the first cover 110 from hitting the hand.

The first cover 110 includes the connection end 111. The connection end 111 is rotatably connected to the first portion 131. The operation member 210 is disposed at the end of the second portion 132 away from the connection end 111.

In this embodiment, the operation member 210 is arranged at the end of the second portion 132 away from the connection end 111, such that the operation member 210 is not required to apply a relatively large force to disengage the first fixing member 180 from the second fixing member 190, achieving an effect of saving force application.

The process of converting the charging device 1 of the present disclosure from the first state to the second state and from the second state to the first state will be described in detail based on the charging device 1 provided in the previous embodiments.

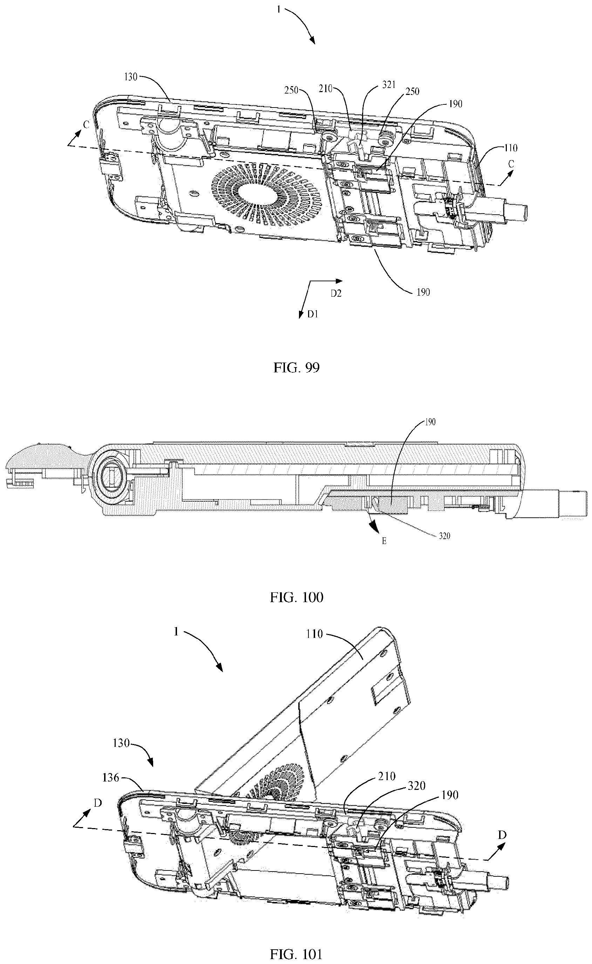

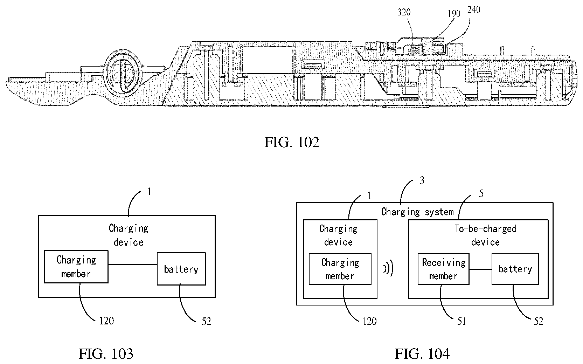

As shown in FIG. 97 to FIG. 102, FIG. 97 is a schematic view of a portion of the charging device being in the first state according to an embodiment of the present disclosure; FIG. 98 is a cross-sectional view of the structure shown in FIG. 97, taken along the line B-B; FIG. 99 is a schematic view of the first cover of the charging device being just uncapped from the second cover of the charging device or the first cover being about to cap with the second cover; FIG. 100 is a cross-sectional view of the structure shown in FIG. 99, taken along the line C-C; FIG. 101 is a schematic view of a portion of the charging device being in the second state; and FIG. 102 is a cross-sectional view of the structure shown in FIG. 101, taken along the line D-D. A process form FIG. 97 to FIG. 99 and further to FIG. 102 is a process of converting the charging device 1 from the first state to the second state. When the charging device 1 is in the first state, the operation member 210 is pressed towards the first direction D1, the pressed operation member 210 causes the second resetting member 250 to be compressed, and the operation member 210 compresses the swinging member 320 to cause the swinging member 320 to flip around the direction E. The swinging member 320 flips to drive the second fixing member 190 to move in the second direction D2 to compress the first resetting member 240. The second fixing member 190 may be disengaged from the first fixing member 180 by moving a certain distance along the second direction D2. In this way, the first cover 110 is separated from the second cover 130, and the first cover 110 is driven by the driving assembly 140 to move to a position of having an angle relative to the second cover 130. Therefore, the charging device 1 enters the second state.

When the second fixing member 190 is disengaged from the first fixing member 180, the first resetting member 240 is released and elongates to drive the second fixing member 190 to be reset. The second resetting member 250 is released and elongates to drive the operation member 210 to be reset.

A process from FIG. 102 to FIG. 99 and further to FIG. 97 may be a process of converting the charging device from the second state to the first state. When the charging device 1 is in the second state, and when the first cover body 110 is pressed, the first cover 110 rotates relative to the second cover 130. When the first cover 110 abuts against the second fixing member 190, the first cover 110 compresses the second fixing member 190. The second fixing member 190 is compressed to compress the first resetting member 240, and the first cover 110 may further rotate relative to the second cover 130, until the first fixing member 180 in the first cover 110 is fixedly engaged with the second fixing member 190. At this moment, the charging device 1 is in the first state.

The charging device 1 further includes the driving assembly 140. The driving assembly 140 is configured to drive the first cover 110 to rotate relative to the second cover 130 when the first cover 110 is uncapped from the second cover 130, such that the angle is formed between the first cover 110 and the second cover 130. The driving assembly 140 in the charging device 1 provided in the embodiment may refer to the previous description, and will not be repeated here.

As shown in FIG. 103, FIG. 103 is a circuit diagram of the charging device according to an embodiment of the present disclosure. In this embodiment, the charging device 1 further includes a battery 52, the battery 52 is arranged in either of the first cover 110 and the second cover 120. The battery 110 is configured to provide electrical energy to the charging member 120.

The present disclosure further provides a charging system 3. As shown in FIG. 104, FIG. 104 is a schematic view of the charging system according to an embodiment of the present disclosure. The charging system 3 includes the to-be-charged device 5 and the charging device 1 as described in any of the previous embodiments. The to-be-charged device 5 is arranged with a receiving member 51 and a battery 52. When the to-be-charged device 5 is placed on the first cover 110, the receiving member 51 is wirelessly connected to the charging member 120 to charge the battery 52 in the to-be-charged device 5.

Although embodiments of the present disclosure are shown and described in the above, it is understood that the above embodiments are exemplary and shall not be interpreted as limiting the present disclosure. Variations, modifications, replacements, and variants of the above embodiments may be made by any ordinary skilled person in the art within the scope of the present disclosure, and these improvements and embellishments shall be within the scope of the present disclosure.

## Claims

1. A charging device, **characterized by** comprising:
a first cover; and
a charging member, carried in the first cover;
a second cover, rotatably connected to the first cover , wherein the charging device is capable of being in an initial state where the first cover is capped with the second cover;
a driving assembly, configured to drive the first cover to rotate relative to the second cover to reach a first position, wherein a first angle is formed between the first cover and the second cover when the first cover is rotated relative to the second cover to reach the first position; and
a cushion assembly, configured to allow the first cover to be manually rotated from the first position to a second position; wherein a second angle is formed between the first cover and the second cover when the first cover is rotated relative to the second cover to reach the second position, the second angle being greater than the first angle.

2. The charging device according to claim 1, wherein the driving assembly comprises:
a position limiting member, fixed to the second cover; and
a driving member, wherein an end of the driving member is fixed to the position limiting member, the other end of the driving member is configured to drive the first cover to rotate relative to the second cover; and when the driving member drives the first cover to rotate to reach the first position, the driving member is limited from moving further by the position limiting member.

3. The charging device according to claim 2, wherein the position limiting member comprises:
a receiving portion, having a receiving space to receive at least a part of the driving member;
a first fixing portion, connected to the receiving portion and configured to be fixed to the second cover;
a second fixing portion, connected to the receiving portion and configured to fix at least a part of the driving member; and
a position limiting portion, connected to the receiving portion and configured to limit an extent to which the driving member drives the first cover to rotate.

4. The charging device according to claim 3, wherein the driving member comprises:
a third fixing portion, fixed to the second fixing portion;
a deformation portion, connected to the third fixing portion, wherein the deformation portion is deformed when the charging device is in the initial state; and
a driving portion, wherein the deformation portion drives the driving portion to move to drive the first cover to rotate when the first cover is uncapped from the second cover.

5. The charging device according to claim 2, wherein the driving assembly further comprises:
an adjustment member, configured to adjust the amount of deformation of the driving member when the charging device is in the initial state where the first cover is capped with the second cover.

6. The charging device according to claim 5, wherein the position limiting member comprises a receiving portion, a first fixing portion, and an elastic portion;
the receiving portion has a receiving space, the first fixing portion is configured to be fixed to the second cover, the elastic portion is arranged on an inner wall of the receiving portion defining the receiving space;
the adjustment member comprises: a rotating portion, a plurality of adjustment portions, and a fixed engaging portion; the rotating portion is received in the receiving space and is rotatable, the plurality of adjustment portions are arranged around a circumference of the rotating portion, the plurality of adjustment portions are configured to be engaged with the elastic portion;
the fixed engaging portion is disposed at an end of the rotating portion and is configured to fix the driving member; and
the amount of deformation of the driving member in the initial state is adjusted when the rotating portion rotates to drive the plurality of adjustment portions to rotate.

7. The charging device according to claim 6, wherein the adjustment member further comprises an operation portion, the operation portion is connected to the rotating portion and is exposed out of the second cover, and the operation portion is configured to receive an operation and to drive the rotating portion to rotate.

8. The charging device according to claim 1, wherein an end of the cushion assembly is connected to the driving assembly, the other end of the cushion assembly is fixed to the first cover, and the cushion assembly is further configured to provide cushioning when the driving assembly drives the first cover to move.

9. The charging device according to claim 8, wherein the cushion assembly comprises a first shaft sleeve, a second shaft sleeve and a damping medium;
the first shaft sleeve is fixed to the driving assembly, the second shaft sleeve is disposed inside the first shaft sleeve and is movable relative to the first shaft sleeve;
a rotation gap is formed between the first shaft sleeve and the second shaft sleeve, the damping medium being received in the rotation gap; and
the damping medium is configured to slow down relative movement between the first shaft sleeve and the second shaft sleeve.

10. The charging device according to claim 9, wherein the cushion assembly is configured to allow the first cover to stop at any position between the first position and the second position.

11. The charging device according to claim 10, wherein the driving cushion assembly further comprises: an adapter, wherein a part of the adapter is configured to be fixed to a fixed member, another part of the adapter sleeves a position limiting member of the driving assembly, the adapter is rotatable relative to the position limiting member,, an end of the second shaft sleeve is further fixed to the adapter;
the second shaft sleeve comprises:
a first sleeve body, partially arranged inside the first shaft sleeve and being rotatable relative to the first shaft sleeve; and
a first retaining portion, disposed at an end of the first sleeve body away from the position limiting member and protruding out of a circumference of the first sleeve body , wherein the first retaining portion is configured to be fixed to the adapter.

12. The charging device according to claim 11, wherein the cushion assembly further comprises a damping member, the damping member comprises a second retaining portion and a damping portion; the second retaining portion is fixed to the adapter, the damping portion sleeves a circumference of the second shaft sleeve; the damping portion is configured to be engaged with the second shaft sleeve to limit a rotation angle of the damping portion with respect to the second shaft sleeve.

13. The charging device according to claim 12, wherein the damping portion comprises a damping body and an elastic portion, the damping body sleeves the circumference of the first shaft sleeve, the elastic portion protrudes out of and is connected to an inner wall of the damping body, the first shaft sleeve comprises a second sleeve body and a protrusion, the second sleeve body sleeves an outside of the second shaft sleeve, the protrusion protrudes out of and is connected to an outside of the second sleeve body, a friction is generated by interference between the protrusion and the elastic portion and capable of stopping the first cover at any position between the first position and the second position.

14. The charging device according to claim 1, wherein the second cover has a body portion and a first portion protruding out of the body portion, the first cover has a connection end, the connection end is rotatably connected to the first portion and is further configured to be limited by the first portion to limit a rotation angle at which the first cover is able to be manually rotated.

15. The charging device according to claim 1, further comprising:
a first fixing member, arranged on the first cover;
a second fixing member, arranged on the second cover, wherein the first cover is capped with the second cover body when the first fixing member is fixed to the second fixing member; and
an operation member, configured to disengage the first fixing member from the second fixing member.

16. The charging device according to claim 15, wherein the second cover comprises a first portion and a second portion which is bent relative to and connected to the first portion; the first cover is rotatably connected to the first portion; the second portion is exposed out of the first cover when the charging device is in the first state; and the operation member is arranged on the second portion.

17. The charging device according to claim 16, wherein the first cover comprises a connection end, the connection end is rotatably connected to the first portion; and the operation member is disposed at an end of the second portion away from the connection end.

18. The charging device according to claim 16, wherein the second cover further comprises: a body portion, connected to the first portion and the second portion, wherein,
the first portion and the second portion are each protruding out of and arranged on a same side of the body portion;
the body portion, the first portion and the second portion cooperatively define a receiving space to receive the first cover when the charging device is in the first state; and
a portion of the second fixing member engaged with the first fixing member is disposed out of the receiving space.

19. The charging device according to claim 18, wherein when the operation member is pressed, the portion of the second fixing member engaged with the first fixing member is configured to move in a direction away from the receiving space to disengage the first fixing member from the second fixing member.

20. The charging device according to claim 19, wherein when the operation member is pressed, the portion of the second fixing member engaged with the first fixing member is configured to translate or flip in the direction away from the receiving space to disengage the first fixing member from the second fixing member.

21. The charging device according to claim 18, further comprising:
a pushing member, carried on the second cover and configured to be driven by the operation member to move, wherein the second fixing member is driven to be deformed when the pushing member moves, to disengage the first fixing member from the second fixing member.

22. The charging device according to claim 21, wherein the operation member is engaged with the pushing member by an inclined face.

23. The charging device according to claim 18, further comprising: the operation member is engaged with the second fixing member by an inclined face; and when the operation member is pressed, the second fixing member is driven to be disengaged from the first fixing member.

24. The charging device according to claim 16, wherein the second cover further comprises: a body portion;
the body portion is connected to the first portion and the second portion, the first portion and the second portion are each protruding out of and arranged on a same side of the body portion;
the body portion, the first portion and the second portion cooperatively define a receiving space to receive the first cover when the charging device is in the first state; and
the second fixing member is partially exposed in the receiving space.

25. The charging device according to claim 24, wherein the second cover comprises a first sub-cover and a second sub-cover;
with respect to the second sub-cover, the first sub-cover is disposed away from the first cover;
the second fixing member is carried on the second sub-cover;
the second sub-cover has an opening communicated with the receiving space,
the second fixing member is partially exposed out of or retracted to an inside of the second cover through the opening.

26. The charging device according to claim 1, further comprising:
a resetting member, configured to reset the second fixing member and the operation member after the second fixing member is disengaged from the first fixing member.

27. A charging device, **characterized by** comprising:
a first cover;
a charging member, carried in the first cover;
a second cover, rotatably connected to the first cover, wherein the charging device is capable of being in an initial state where the first cover is capped with the second cover;
a driving assembly, configured to drive the first cover to rotate relative to the second cover by a preset angle; and
a cushion assembly, configured to slow down a speed that the first cover rotates relative to the second cover.

28. The charging device according to claim 27, wherein the cushion assembly comprises a first shaft sleeve, a second shaft sleeve and a damping medium;
the first shaft sleeve is fixed to the driving assembly, the second shaft sleeve is disposed inside the first shaft sleeve and is movable relative to the first shaft sleeve;
a rotation gap is formed between the first shaft sleeve and the second shaft sleeve, the damping medium being received in the rotation gap; and
the damping medium is configured to slow down relative movement between the first shaft sleeve and the second shaft sleeve.

29. The charging device according to claim 28, wherein the driving cushion assembly further comprises:
an adapter, wherein a part of the adapter is configured to be fixed to a fixed member, another part of the adapter sleeves a position limiting member of the driving assembly, the adapter is rotatable relative to the position limiting member, an end of the second shaft sleeve is further fixed to the adapter; and
a seal member, configured seal the rotation gap to prevent the damping medium from leaking.

30. The charging device according to claim 27, further comprising: a first fixing member, a second fixing member and an operation member,
wherein the first fixing member is arranged on the first cover, the second fixing member is arranged on the second cover; the operation member is configured to disengage the second fixing member from the first fixing member to separate the first cover from the second cover;
the second cover comprises a first portion and a second portion that is bent relative to and connected to the first portion; the first cover is rotatably connected to the first portion; and
when the charging device is in the first state, the second portion is exposed out of the first cover; and the operation member is arranged on the second portion.

31. The charging device according to claim 30, wherein the second cover further comprises: a body portion;
the body portion is connected to the first portion and the second portion, the first portion and the second portion are each protruding out of and arranged on a same side of the body portion;
the body portion, the first portion and the second portion cooperatively define a receiving space to receive the first cover when the charging device is in the first state; and
the second fixing member is partially exposed in the receiving space.

32. The charging device according to claim 31, wherein the second cover comprises a first sub-cover and a second sub-cover;
with respect to the second sub-cover, the first sub-cover is disposed away from the first cover;
the second fixing member is carried on the second sub-cover;
the second sub-cover has an opening communicated with the receiving space,
the second fixing member is partially exposed out of or retracted to an inside of the second cover through the opening.

33. The charging device according to claim 32, further comprising:
a swinging member, movably connected to the second cover and configured to be driven by the operation member, when the operation member is pressed, to rotate to drive the second fixing member to be disengaged from the first fixing member, allowing the first cover to be separated from the second cover.

34. The charging device according to claim 33, wherein the swinging member comprises:
a flipping portion, disposed on a side of the operation member away from the pressing portion and configured to be driven by the operation member to flip;
a connection rod portion, connected to the flipping portion and configured to be driven by the flipping portion flipping to rotate; and
a pushing portion, connected to the connection rod portion and spaced apart from the flipping portion, wherein the pushing portion is configured to push the second fixing member to move to disengage the second fixing member from the first fixing member.

35. The charging device according to claim 34, wherein the second fixing member comprises:
an operation portion, configured to be engaged with the pushing portion and to be driven by the pushing portion to move;
a connection portion, connected to the operation portion; and
a fixed engaging portion, connected to the connection portion and configured to be engaged with the first fixing member and to be driven by the pushing portion to move, so as to be disengaged from the first fixing member.

36. The charging device according to claim 27, wherein the driving assembly comprises a driving member;
when the charging device is in the initial state, the driving member is deformed;
when the first cover is uncapped from the second cover, the first cover is driven by deformation of the driving member to rotate relative to the second cover.

37. The charging device according to claim 36, wherein the driving assembly further comprises:
an adjustment member, configured to adjust the amount of deformation of the driving member when the charging device is in the initial state.

38. The charging device according to claim 27, further comprising a battery, wherein the battery is arranged in either of the first cover and the second cover, and the battery is configured to provide electrical energy to the charging member.

39. A charging system, **characterized by** comprising a to-be-charged device and the charging device as claimed in any one of claims 1-38, wherein the to-be-charged device is arranged with a receiving member and a battery; when the to-be-charged device is arranged on the first cover, the receiving member is wirelessly connected to the charging member to charge the battery in the to-be-charged device.
